# EUROPEAN PATENT SPECIFICATION

(11) **EP 2 923 930 B1**
(45) Date of publication and mention of the grant of the patent: **30.11.2016**
(21) Application number: 13864751.6
(22) Date of filing: 20.12.2013
(51) Int. Cl.: B62K 5/05, B62K 5/027, B62K 5/06, B62K 5/08, B62K 5/10

(54) **VEHICLE**
FAHRZEUG
VÉHICULE

(30) Priority: 21.12.2012 JP 2012279996; 21.12.2012 JP 2012278879; 01.07.2013 JP 2013138481
(43) Date of publication of application: 30.09.2015
(73) Proprietor: Yamaha Hatsudoki Kabushiki Kaisha, Iwata-shi, Shizuoka 438-8501 (JP)
(72) Inventor: IIZUKA Toshio, Iwata-shi Shizuoka 438-8501 (JP); HIRAYAMA Yosuke, Iwata-shi Shizuoka 438-8501 (JP)
(74) Representative: Grünecker Patent- und Rechtsanwälte PartG mbB
(86) International application number: PCT/JP2013/084285
(87) International publication number: WO 2014/098228

(56) References cited:
- EP-A1- 1 561 612
- WO-A1-2012/007819
- CN-Y- 201 151 444
- DE-A1-102010 052 716
- JP-A- 2011 195 099
- US-A1- 2010 194 068

## Description

### Technical Field

The present invention relates to a vehicle that includes a body frame that can lean and two front wheels.

### Background Art

A vehicle described in Patent Document 1 includes a body frame that can lean and two front wheels. Additionally, the vehicle includes a link mechanism that supports the two front wheels so as to be disposed in an up-and-down direction of the body frame. The body frame that can lean includes a link support portion that supports the link mechanism. Additionally, the body frame includes an upper longitudinal frame portion that extends from a lower portion of the link support portion towards the rear in a front-and-rear direction of the body frame, a vertical frame portion that extends downwards in a up-and-down direction of the body frame from a rear portion of the upper longitudinal frame portion, and a lower longitudinal frame portion that extends from a lower portion of the vertical frame portion towards the rear in the front-and-rear direction of the body frame. The link mechanism includes an upper cross member that is turnably supported on the link support portion at a middle portion thereof turn and a lower cross member that is disposed further downwards than the upper cross member and that is turnably supported on the link support portion at a middle portion thereof. In addition, the link mechanism also includes a right side member that is turnably supported at right end portions of the upper cross member and the lower cross member and a left side member that is turnably supported at left end portions of the upper cross member and the lower cross member. The right side member supports the right front wheel via a right shock absorber. The left side member supports the left front wheel via a left shock absorber. With the body frame resting in an upright state, the upper cross member, the lower cross member, the right side member and the left side member are disposed above the right front wheel and the left front wheel in the up-and-down direction of the body frame. Additionally, the upper cross member and the lower cross member are turnably supported on the link support portion about an upper middle axis and a lower middle axis, respectively, that are inclined relative to the front-and-rear direction of the body frame and of which fronts lie further upwards than rears.

### Related Art Document

### Patent Document

[Patent Document 1] JP-A-2005-313876

Further, WO 2012/007819 A1 shows a vehicle according to the preamble of claim 1.

### Summary of the Invention

### Problem that the Invention is to Solve

In the vehicle described in Patent Document 1, the upper cross member, the lower cross member, the right side member and the left side member are disposed not between the right front wheel and the left front wheel but above the right front wheel and the left front wheel. This can reduce the distance between the right front wheel and the left front wheel. As a result of this, a size in the left-and-right direction of the vehicle can be reduced.

However, the vehicle described in Patent Document 1 includes the link mechanism that supports the two front wheels so as to be displaced in the up-and-down direction of the body frame. Additionally, the upper cross member and the lower cross member are turnably supported on the link support portion about the upper middle axis and the lower middle axis, respectively, that are inclined relative to the front-and-rear direction of the body frame and of which the fronts lie further upwards than the rears. Because of this, when the right front wheel or the left front wheel moves upwards in the up-and-down direction of the bodyframe as a result of the link mechanism being actuated to operate, the right front wheel or the left front wheel moves to the rear in the front-and-rear direction of the body frame. Further, the right front wheel and the left front wheel turn as a result of being steered in such a state that they move to the rear. Because of this, the vertical frame portion of the body frame is provided in a position where its interference with the right front wheel and the left front wheel is avoided. As a result of this, the distance between the left and right front wheels and the body frame is increased, resulting in the fact that the wheelbase is enlarged. This enlarges the size in the front-and-rear direction of the vehicle.

In the vehicle described in Patent Document 1, although the size in the left-and-right direction of the vehicle can be reduced, the size in front-and-rear direction of the vehicle is increased.

An object of the invention is to provide a vehicle including a body frame that can lean and two front wheels that can reduce the left-and-right direction and size in front-and-rear directions of the vehicle.

### Means for Solving the Problem

(1) There is provided a vehicle including:
   a right front wheel and a left front wheel that are disposed in a left-and-right direction as seen from a front of the vehicle and that can be steered by operating a handlebar;
   a link mechanism including:
      an upper cross member that is disposed above the right front wheel and the left front wheel with the vehicle resting in an upright state;
      a lower cross member that is disposed further below the upper cross member in an up-and-down direction of the body frame and that is disposed above the right front wheel and the left front wheel;
      a right side member that is turnably supported on a right portion of the upper cross member at an upper portion thereof, that is turnably supported on a right portion of the lower cross member at a lower portion thereof, that is disposed above the right front wheel and the left front wheel and that supports the right front wheel; and
      a left side member that is turnably supported on a left portion of the upper cross member at an upper portion thereof, that is turnably supported on a left portion of the lower cross member at a lower portion thereof, that is disposed above the right front wheel and the left front wheel and that supports the left front wheel,
   the body frame that can lean in the left-and-right direction of the vehicle and includes:
      a link support portion that turnably supports at a middle portion of the upper cross member of the link mechanism at an upper portion thereof and that turnably supports a middle portion of the lower cross member at a lower portion thereof;
      an upper longitudinal frame portion that extends rearward in the front-and-rear direction of the body frame from the lower portion of the link support portion;
      a vertical frame portion that extends downward in the up-and-down direction of the body frame from a rear portion of the upper longitudinal frame portion; and
      a lower longitudinal frame portion that extends rearward from a lower portion of the vertical frame portion, and
   a steering shaft on which the handlebar is provided at an upper portion thereof, that is turnably supported on the link support portion, and of which a lower portion lies further forwards in the front-and-rear direction of the body frame than the upper portion,
   wherein the link support portion of the body frame turnably supports the upper cross member and the lower cross member in such a way that an acute angle that is formed by an imaginary plane that is perpendicular to turning axes of the upper cross member and the lower cross member and the up-and-down direction of the body frame is smaller than an acute angle that is formed by a turning axis of the steering shaft and the up-and-down direction of the body frame, and
   the vertical frame portion of the body frame is formed in such a way that:
      an upper end of a front edge thereof is disposed further forwards than an imaginary plane that is parallel to the turning axis of the steering shaft and that is brought into contact with rear portions of the right front wheel and the left front wheel with the vehicle resting in the upright state,
      a width in the left-and-right direction between the upper end and a lower end of the front edge is smaller than a distance between the right front wheel and the left front wheel, and
      an acute angle that is formed by an imaginary line that passes through the upper end and the lower end and the up-and-down direction of the body frame is smaller than an acute angle that is formed by the turning axis of the steering shaft and the up-and-down direction of the body frame.

   According to the configuration of (1), the link support portion of the body frame turnably supports the upper cross member and the lower cross member in such a way that the acute angle that is formed by the imaginary plane that is perpendicular to the turning axes of the upper cross member and the lower cross member and the up-and-down direction of the body frame is smaller than the acute angle that is formed by the turning axis of the steering shaft and the up-and-down direction of the body frame. This can reduce the rearward moving amount of the right front wheel and the left front wheel even though the link mechanism is actuated to operate to thereby move the right front wheel and the left front wheel upwards.
   According to the configuration of (1), in addition to the reduction in rearward moving amount of the right front wheel and the left front wheel when the link mechanism is actuated to operate to thereby move the right front wheel and the left front wheel upwards, the vertical frame portion of the body frame is formed in such a way that the upper end of the front edge thereof is disposed further forwards than the imaginary plane that is parallel to the turning axis of the steering shaft and that is brought into contact with the rear portions of the right front wheel and the left front wheel with the vehicle resting in the upright state and that the width in the left-and-right direction between the upper end and the lower end of the front edge is formed smaller than the distance between the right front wheel and the left front wheel. The rearward moving amount of the right front wheel and the left front wheel is reduced that occurs when the link mechanism is actuated to operate to thereby move them upwards and the width in the left-and-right direction between the upper end and the lower end of the vertical frame portion is reduced. Therefore, even though the upper end of the front edge of the vertical frame portion is caused to move nearer to the right front wheel and the left front wheel in the front-and-rear direction of the body frame, the upper end of the front edge of the vertical frame portion can be restricted from interfering with the right front wheel and the left front wheel.
   According to the configuration of (1), in addition to the fact that the upper end of the front edge of the vertical frame portion is caused to lie nearer to the right front wheel and the left front wheel in the front-and-rear direction of the body frame, further, the vertical frame portion is formed in such a way that the acute angle that is formed by the imaginary line that passes through the upper end and the lower end of the vertical frame portion and the up-and-down direction of the body frame is smaller than the acute angle that is formed by the turning axis of the steering shaft and the up-and-down direction of the body frame. This enables the lower end of the front edge of the vertical frame portion to lie nearer to the upper end of the front edge while restricting the interference of the vertical frame portion with the right front wheel and the left front wheel. Therefore, both the upper end and the lower end of the front edge of the vertical frame portion are allowed to lie nearer to the left and right front wheels.
   According to the configuration of (1), the acute angle that is formed by the moving loci of rear ends of the right front wheel and the left front wheel and the up-and-down direction of the body frame and the acute angle that is formed by the front edge of the vertical frame portion and the up-and-down direction of the body frame are both smaller than the acute angle that is formed by the turning axis of the steering shaft and the up-and-down direction of the body frame. This enables the moving loci of the rear ends of the right front wheel and the left front wheel and the front edge of the vertical frame portion to lie near to each other in the front-and-rear direction of the body frame while avoiding the interference of the body frame with the right front wheel and the left front wheel. This can reduce the wheelbase of the vehicle to thereby make a size in front-and-rear direction of the vehicle small. Further, the width in the left-and-right direction between the upper end and the lower end of the vertical frame portion is reduced, and therefore, the upper end of the front edge of the vertical frame portion can be restricted from interfering with the right front wheel and the left front wheel while restricting the increase in space between the right front wheel and the left front wheel that would otherwise result to dispose the vertical frame portion.
   According to the configuration of (1), the moving loci of the rear ends of the right front wheel and the left front wheel and the front edge of the vertical frame portion are allowed to lie nearer to each other in the front-and-rear direction of the body frame while avoiding the interference of the body frame with the right front wheel and the left front wheel by devising the link support portion and the vertical frame portion of the body frame. This reduces the size in front-and-rear direction of the vehicle, and therefore, this restricts the increase in size in the left-and-right direction of the vehicle.
   Consequently, according to the configuration of (1), it is possible to make small both the size in the left-and-right and front-and-rear directions of the vehicle that includes the body frame that can lean and the two front wheels.
(2) In the vehicle including the body frame that can lean and the two front wheels, the vertical frame portion of the body frame may be formed in such a way that an acute angle that is formed by an imaginary line that passes through the upper end and the lower end and the up-and-down direction of the body frame is smaller than an acute angle that is formed by an imaginary plane that is parallel to the turning axes of the upper cross member and the lower cross member and the up-and-down direction of the body frame.
   According to the configuration of (2), the lower end of the front edge of the vertical frame portion can be caused to lie nearer to the right front wheel and the left front wheel. This enables the moving loci of the rear ends of the right front wheel and the left front wheel and the front edge of the vertical frame portion to lie much nearer to each other in the front-and-rear direction of the body frame while avoiding the interference of the body frame with the right front wheel and the left front wheel. This can reduce the wheelbase of the vehicle to thereby make a size in front-and-rear direction of the vehicle small. Consequently, it is possible to make small the size in the left-and-right and front-and-rear directions of the vehicle that includes the body frame that can lean and the two front wheels.
(3) In the vehicle including the body frame that can lean and the two front wheels, the vertical frame portion of the body frame may be disposed in a position where the upper end lies nearer to the imaginary plane that is parallel to the turning axis of the steering shaft and that is brought into contact with the rear portions of the right front wheel and the left front wheel with the vehicle resting in the upright state than the turning axis of the steering shaft.
   According to the configuration of (3), the upper end of the front edge of the vertical frame portion is disposed so as not to be too near to the right front wheel and the left front wheel in the front-and-rear direction of the body frame. This enables the moving loci of the rear ends of the right front wheel and the left front wheel and the front edge of the vertical frame portion to lie much nearer to each other in the front-and-rear direction of the body frame while avoiding the interference of the body frame with the right front wheel and the left front wheel. This can reduce the wheelbase of the vehicle to thereby make a size in front-and-rear direction of the vehicle small. Consequently, it is possible to make small the size in the left-and-right and front-and-rear directions of the vehicle that includes the body frame that can lean and the two front wheels.
(4) In the vehicle including the body frame that can lean and the two front wheels, the right front wheel and the left front wheel may be supported so that upper ends thereof can move further upwards than the upper end of the vertical frame portion of the body frame in the up-and-down direction of the body frame.
   According to the configuration of (4), in addition to the fact that the moving loci of the rear ends of the right front wheel and the left front wheel and the front end of the vertical frame portion to lie nearer to each other in the front-and-rear direction of the body frame while avoiding the interference of the body frame with the right front wheel and the left front wheel, the right front wheel and the left front wheel are allowed to move in such a way that the upper ends thereof come to lie further upwards than the upper end of the vertical frame portion of the body frame in the up-and-down direction of the body frame. Conventionally, in the event that the right front wheel and the left front wheel are allowed to move in the up-and-down direction largely, the right front wheel and the left front wheel are also allowed to move to the rear largely, thereby increasing the size in front-and-rear direction of the vehicle. However, the rearward moving amount of the right front wheel and the left front wheel in association with the moving amount thereof in the up-and-down direction is restricted, and therefore, the moving amount in the up-and-down direction of the right front wheel and the left front wheel can be increased. Consequently, the moving amount in the up-and-down direction of the right front wheel and the left front wheel can be increased while restricting the increase in size in the left-and-right and in the front-and-rear directions of the vehicle including the body frame that can lean and the two front wheels.
(5) In the vehicle including the body frame that can lean and the two front wheels, the vehicle may include:
   a telescopic right shock absorber that is provided between the right front wheel and the right side member; and
   a telescopic left shock absorber that is provided between the left front wheel and the left side member, and
   the right shock absorber and the left shock absorber may be provided in such a way that an acute angle that is formed by a direction in which the right and left shock absorbers extend and contract and the up-and-down direction of the body frame is smaller than an acute angle that is formed by the turning axis of the steering shaft and the up-and-down direction of the body frame.
   According to the configuration of (5), the right shock absorber and the left shock absorber are provided in such a way that the acute angle that is formed by the direction in which the right and left shock absorbers extend and contract and the up-and-down direction of the body frame is the same as or smaller than the acute angle that is formed by the turning axis of the steering shaft and the up-and-down direction of the body frame. Conventionally, in the event that the shock absorbers are adopted which extend and contract largely, the right front wheel and the left front wheel tend to move rearwards largely, thereby increasing the size in front-and-rear direction of the vehicle. However, the rearward moving amount of the right front wheel and the left front wheel in association with the movement in the up-and-down direction thereof is restricted, and therefore, it is possible to adopt the shock absorbers that extend and contract largely while avoiding the interference of the body frame with the right front wheel and the left front wheel. Consequently, it is possible to adopt the shock absorbers that extend and contract largely while restricting the increase in size in the left-and-right and front-and-rear directions of the vehicle including the body frame that can lean and the two front wheels, thereby making it possible to increase the moving amount in the up-and-down direction of the right front wheel and the left front wheel.
(6) In the vehicle including the body frame that can lean and the two front wheels, the link mechanism may be provided in such a way that an acute angle that is formed by an imaginary plane that is perpendicular to the turning axes of the upper cross member and the lower cross member and the up-and-down direction of the body frame is smaller than an acute angle that is formed by a direction in which the right shock absorber and the left shock absorber extend or contract and the up-and-down direction of the body frame.
   According to the configuration of (6), the link mechanism is provided in such a way that the acute angle that is formed by the imaginary plane that is perpendicular to the turning axes of the upper cross member and the lower cross member and the up-and-down direction of the body frame is smaller than the acute angle that is formed by the direction in which the right shock absorber and the left shock absorber extend or contract and the up-and-down direction of the body frame. Because of this, it is possible to adopt the shock absorbers that extend and contract more largely while restricting the increase in size in the left-and-right and front-and-rear directions of the vehicle including the body frame that can lean and the two front wheels, thereby making it possible to increase more the moving amount in the up-and-down direction of the right front wheel and the left front wheel.
(7) In the vehicle including the body frame that can lean and the two front wheels, the vertical frame portion of the body frame may include a single tubular member that makes up the front edge thereof and that is disposed at a center between the right front wheel and the left front wheel in the left-and-right direction of the body frame.
   According to the configuration of (7), the front edge of the vertical frame portion of which the front edge is caused to lie nearer to the moving loci of the rear ends of the right front wheel and the left front wheel while avoiding the interference of the body frame with the right front wheel and the left front wheel is made up of the single tubular member. The front edge of the vertical frame portion that lies near to the rear ends of the right front wheel and the left front wheel is made up of the single tubular member that can be made compact while ensuring its rigidity. Therefore, the moving loci of the rear ends of the right front wheel and the left front wheel and the front edge of the vertical frame portion can be made to lie nearer to each other in the front-and-rear direction of the body frame while avoiding the interference of the body frame with the right front wheel and the left front wheel. This can reduce the wheelbase of the vehicle to thereby make a size in front-and-rear direction of the vehicle small. Consequently, it is possible to make small the size in the left-and-right and front-and-rear directions of the vehicle that includes the body frame that can lean and the two front wheels.
(8) In the vehicle including the body frame that can lean and the two front wheels, the body frame may be formed in such a way that an acute angle that is formed by an imaginary line that passes through the upper end and a rear end of a lower portion of the single tubular member that makes up the front edge of the vertical frame portion and the up-and-down direction of the body frame is smaller than an acute angle that is formed by the turning axis of the steering shaft and the up-and-down direction of the body frame.

According to the configuration of (8), the rear end of the lower portion of the vertical frame portion is disposed so as to lie near to the right front wheel and the left front wheel. This enables the moving loci of the rear ends of the right front wheel and the left front wheel and the front edge of the vertical frame portion to lie much nearer to each other in the front-and-rear direction of the body frame while avoiding the interference of the body frame with the right front wheel and the left front wheel. This can reduce the wheelbase of the vehicle to thereby make a size in front-and-rear direction of the vehicle small. Consequently, it is possible to make small the size in the left-and-right and front-and-rear directions of the vehicle that includes the body frame that can lean and the two front wheels.

### Brief Description of Drawings

[Fig. 1] Fig. 1 is an overall side view of a vehicle according to an embodiment of the invention.
[Fig. 2] Fig. 2 is an overall front view of the vehicle with a body cover and front fenders removed.
[Fig. 3] Fig. 3 is a partial side view of the vehicle with the body cover and the front fenders removed.
[Fig. 4] Fig. 4 is a partial plan view of the vehicle with the body cover removed.
[Fig. 5] Fig. 5 is a perspective view of a front portion of a body frame.
[Fig. 6] Fig. 6 is a view seen from a direction indicated by an arrow A in Fig. 5.
[Fig. 7] Fig. 7 is a view seen from a direction indicated by an arrow B in Fig. 5.
[Fig. 8] Fig. 8 is a schematic sectional view taken horizontally along a front portion of the vehicle.
[Fig. 9] Fig. 9 is a partial plan view of the vehicle with the body cover removed, which depicts a steering operation.
[Fig. 10] Fig. 10 is an overall front view of the vehicle with the body cover removed, which depicts a leaning operation of the vehicle.
[Fig. 11] Fig. 11 is a schematic sectional view taken horizontally along the front portion of the vehicle, which depicts the movement of front wheels and the like during the leaning operation of the vehicle.
[Fig. 12] Fig. 12 is a partial side view of the front portion of the vehicle.

### Mode for Carrying out the Invention

### [Definition of Directions]

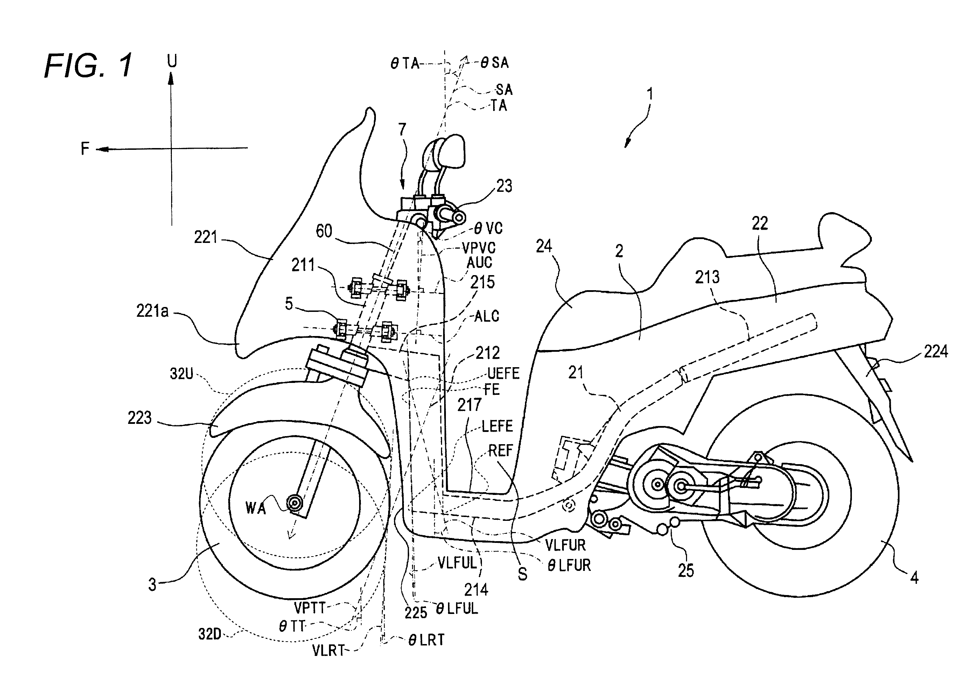

Hereinafter, a vehicle 1 that is one type of a vehicle according to an embodiment of the invention will be described by reference to the drawings. In the drawings, although shapes are different, like reference numerals will be given to like or corresponding portions in function. Hereinafter, in the drawings, an arrow F denotes a front direction in relation to a front-and-rear direction of the vehicle 1 with the vehicle resting in an upright state. In the drawings, an arrow R denotes a rightward direction in relation to a left-and-right direction of the vehicle 1 with the vehicle resting in the upright state. An arrow U denotes an upward direction in relation to an up-and-down direction of the vehicle 1 with the vehicle resting in the upright state. In addition, in the drawings, the arrow F denotes the same direction as a front direction in relation to a front-and-rear direction of a body frame of the vehicle 1. In the drawings, the arrow R denotes the same direction as a rightward direction in relation to a left-and-right direction of the body frame of the vehicle 1. In the drawings, the arrow U denotes the same direction as an upward direction in relation to an up-and-down direction of the body frame of the vehicle 1. When the body frame leans to the left or right in the left-and-right direction of the body frame relative to a vertical direction, the left-and-right direction of the body frame of the vehicle 1 differs from a left-and-right direction of the vehicle 1 with the vehicle resting in the upright state. When the body frame leans to the left or right in the left-and-right direction of the body frame relative to the vertical direction, the up-and-down direction of the body frame of the vehicle 1 differs from an up-and-down direction of the vehicle 1 with the vehicle resting in the upright state. Fig. 1 is an overall side view of the vehicle 1. In the following description, when front, rear, left and right are referred to in indicating directions, they denote front, rear, left and right directions as seen from a rider who rides on the vehicle 1.

### [Configuration]

The vehicle 1 includes a right front wheel 31, a left front wheel 32, a link mechanism 5, a body frame 21, and a steering shaft 60. The right front wheel 31 and the left front wheel 32 are disposed in the left-and-right direction as seen from the front of the vehicle 1 and can be steered by operating a handlebar 23.

The link mechanism 5 has an upper cross member 51, a lower cross member 52, a right side member 53, and a left side member 54. The upper cross member 51 is disposed above the right front wheel 31 and the left front wheel 32 with the vehicle 1 resting in the upright state. The lower cross member 52 is disposed further downwards than the upper cross member 51 in the up-and-down direction of the body frame 21. In a side view of the vehicle 1 which is resting in the upright state, a front end of the lower cross member 52 is disposed further forwards than a front end of the upper cross member 51 in the front-and-rear direction of the body frame 21. The lower cross member 52 is disposed above the right front wheel 31 and the left front wheel 32. The right side member 53 is turnably supported on a right portion of the upper cross member 51 at an upper portion thereof. The right side member 53 is turnably supported on a right portion of the lower cross member 52 at a lower portion thereof. The right side member 53 is disposed further upwards of the right front wheel 31 and the left front wheel 32 and supports the right front wheel 31. The left side member 54 is turnably supported on a left portion of the upper cross member 51 at an upper portion thereof. The left side member 54 is turnably supported on a left portion of the lower cross member 52 at a lower portion thereof. The left side member 54 is disposed further upwards of the right front wheel 31 and the left front wheel 32 and supports the left front wheel 32. The link mechanism 5 is disposed further upwards of the right front wheel 31 and the left front wheel 32.

The body frame 21 can lean to the left or right in the left-and-right direction of the vehicle 1. The body frame 21 has a link support portion 211, a connecting member 215 (an example of an upper longitudinal frame portion of the invention), a down frame 212 (an example of a vertical frame portion of the invention), and an under frame 214 (an example of a lower longitudinal frame portion). The link support portion 211 turnably supports a middle portion of the upper cross member 51 of the link mechanism 5 at an upper portion thereof and turnably supports a middle portion of the lower cross member 52 at a lower portion thereof. The connecting member 215 extends to the rear in the front-and-rear direction of the body frame 21 from the lower portion of the link support portion 211. The down frame 212 extends downwards in the up-and-down direction of the body frame 21 from a rear portion of the connecting member 215. The under frame 214 extends to the rear from a lower portion of the down frame 212. The under frame 214 lies at the rear of the right front wheel 31 and the left front wheel 32 in a side view of the vehicle 1 which is resting in the upright state. In a side view of the vehicle 1 which is resting in the upright state, at least part of the under frame 214 lies further downwards of a rotational axis WA of the right front wheel 31 and the left front wheel 32.

The handlebar 23 is provided at an upper portion of the steering shaft 60, and the steering shaft 60 is turnably supported in the link support portion 211 therein. The steering shaft 60 is such that a lower portion lies further forwards than an upper portion in the front-and-rear direction of the body frame 21.

The link support portion 211 of the body frame 21 turnably supports the upper cross member 51 and the lower cross member 52 in such a way that an acute angle θVC that is formed by an imaginary plane VPVC that is perpendicular to a turning axis AUC of the upper cross member 51 and a turning axis ALC of the lower cross member 52 and the up-and-down direction of the body frame 21 is smaller than an acute angle θSA that is formed by a turning axis SA of the steering shaft 60 and the up-and-down direction of the body frame 21. In a side view of the vehicle 1 that is resting in the upright state, the acute angle θVC that is formed by the imaginary plane VPVC that is perpendicular to the turning axis AUC of the upper cross member 51 and the turning axis ALC of the lower cross member 52 and the up-and-down direction of the body frame 21 is smaller than the acute angle θSA that is formed by the turning axis SA of the steering shaft 60 and the up-and-down direction of the body frame 21.

The down frame 212 of the body frame 21 is disposed in such a way that an upper end UEFE of a front edge FE thereof lies further ahead of an imaginary plane VPTT that is parallel to the turning axis SA of the steering shaft 60 and that is brought into contact with rear portions of the right front wheel 31 and the left front wheel 32 with the vehicle 1 resting in the upright state. The down frame 212 of the body frame 21 is disposed in such a way that a lower end LEFE of the front edge FE thereof lies further rearwards of the imaginary plane VPTT that is parallel to the turning axis SA of the steering shaft 60 and that is brought into contact with the rear portions of the right front wheel 31 and the left front wheel 32 with the vehicle 1 resting in the upright state. The front edge FE of the down frame 212 of the body frame 21 is a line that connects front ends of the down frame 212 in a side view of the vehicle 1 which is resting in the upright state.

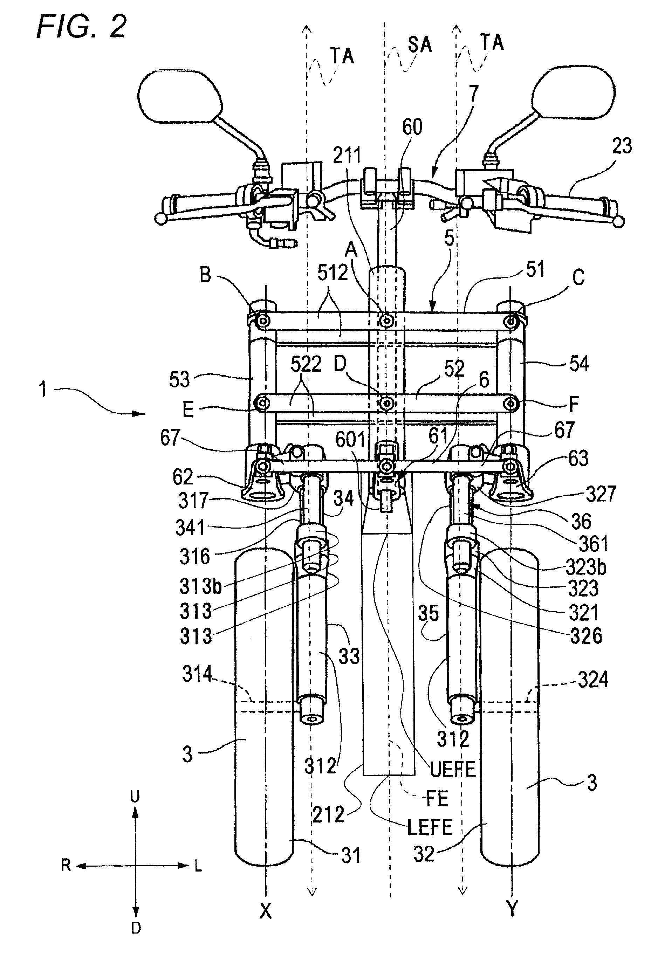

As shown in Fig. 2, the down frame 212 of the body frame 21 is formed in such a way that a width in the left-and-right direction between the upper end UEFE and the lower end LEFE of the front edge FE is smaller than a distance between the right front wheel 31 and the left front wheel 32. In a front view of the vehicle that is resting in the upright state, the down frame 212 of the body frame 21 is disposed so that the upper end UEFE and the lower end LEFE of the front edge FE lie between the right front wheel 31 and the left front wheel 32.

Returning to Fig. 1, the down frame 212 of the body frame 21 is formed in such a way that an acute angle θLFUL that is formed by an imaginary line VLFUL that passes through the upper end UEFE and the lower end LEFE and the up-and-down direction of the body frame 21 is smaller than an acute angle θSA that is formed by the turning axis SA of the steering shaft 60 and the up-and-down direction of the body frame 21. In a side view of the vehicle 1 which is resting in the upright state, the acute angle θLFUL that is formed by the imaginary line VLFUL that passes through the upper end UEFE and the lower end LEFE and the up-and-down direction of the body frame 21 is smaller than the acute angle θSA that is formed by the turning axis SA of the steering shaft 60 and the up-and-down direction of the body frame 21.

The down frame 212 of the body frame 21 is formed in such a way that the acute angle θLFUL that is formed by the imaginary line VLFUL that passes through the upper end UEFE and the lower end LEFE and the up-and-down direction of the body frame 21 is smaller than the acute angle θVC that is formed by the imaginary plane VPVC that is perpendicular to the turning axis AUC of the upper cross member 51 and the turning axis ALC of the lower cross member 52 and the up-and-down direction of the body frame 21. In a side view of the vehicle 1 which is resting in the upright state, the acute angle θLFUL that is formed by the imaginary line VLFUL that passes through the upper end UEFE and the lower end LEFE and the up-and-down direction of the body frame 21 is smaller than the acute angle θVC that is formed by the imaginary plane VPVC that is perpendicular to the turning axis AUC of the upper cross member 51 and the turning axis ALC of the lower cross member 52 and the up-and-down direction of the body frame 21.

The down frame 212 of the body frame 21 is disposed in a position where the upper end UEFE lies nearer to the imaginary plane VPTT that is parallel to the turning axis SA of the steering shaft 60 and that is brought into contact with the rear portions of the right front wheel 31 and the left front wheel 32 with the vehicle 1 resting in the upright state than the turning axis SA of the steering shaft 60. In the front-and-rear direction of the body frame 21 in the side view of the vehicle 1 resting in the upright state, a distance between the upper end UEFE and the imaginary plane VPTT that is parallel to the turning axis SA of the steering shaft 60 and that is brought into contact with the rear portions of the right front wheel 31 and the left front wheel 32 with the vehicle 1 resting in the upright state is smaller than a distance between the turning axis SA of the steering shaft 60 and the upper end UEFE. In the front-and-rear direction of the body frame 21 in a side view of the vehicle 1 resting in the upright state, the upper end UEFE lies further rearwards of a middle position between the turning axis SA of the steering shaft 60 and the imaginary plane VPTT that is parallel to the turning axis SA of the steering shaft 60 and that is brought into contact with the rear portions of the right front wheel 31 and the left front wheel 32 with the vehicle 1 resting in the upright state.

The right front wheel 31 and the left front wheel 32 are supported in such a way that upper ends thereof can move as high as a position lying higher than the upper end UEFE of the down frame 212 of the body frame 21 in the up-and-down direction of the body frame 21. The upper ends of the right front wheel 31 and the left front wheel 32 when the right front wheel 31 and the left front wheel 32 move to their highest extent lies further upwards of the upper end UEFE of the down frame 212 in the up-and-down direction of the body frame 21.

The vehicle 1 includes a telescopic right shock absorber 33 that is provided between the right front wheel 31 and the right side member 53 and a telescopic left shock absorber 35 that is provided between the left front wheel 32 and the left side member 54.

The right shock absorber 33 and the left shock absorber 35 are provided in such a way that an acute angle θTA that is formed by a direction TA in which the right and left shock absorbers extend and contract and the up-and-down direction of the body frame 21 is the same as or smaller than the acute angle θSA that is formed by the turning axis SA of the steering shaft 60 and the up-and-down direction of the body frame 21. In a side view of the vehicle 1 resting in the upright state, the acute angle θTA that is formed by the direction TA in which the right shock absorber 33 and the left shock absorber 35 extend and contract and the up-and-down direction of the body frame 21 should be the same as or smaller than the acute angle θSA that is formed by the turning axis SA of the steering shaft 60 and the up-and-down direction of the body frame 21. In the example depicted in the drawings, in a side view of the vehicle 1 resting in the upright state, the acute angle θTA that is formed by the direction TA in which the right and left shock absorbers 33, 35 extend and contract and the up-and-down direction of the body frame 21 is the same as the acute angle θSA that is formed by the turning axis SA of the steering shaft 60 and the up-and-down direction of the body frame 21.

The link mechanism 5 is provided in such a way that the acute angle θVC that is formed by the imaginary plane VPVC that is perpendicular to the turning axis AUC of the upper cross member 51 and the turning axis ALC of the lower cross member 52 and the up-and-down direction of the body frame 21 is smaller than the acute angle θTA that is formed by the direction in which the right shock absorber 33 and the left shock absorber 35 extend or contract and the up-and-down direction of the body frame 21. In a side view of the vehicle 1 that is resting in the upright state, the acute angle θVC that is formed by the imaginary plane VPVC that is perpendicular to the turning axis AUC of the upper cross member 51 and the turning axis ALC of the lower cross member 52 and the up-and-down direction of the body frame 21 is smaller than the acute angle θTA that is formed by the direction in which the right shock absorber 33 and the left shock absorber 35 extend or contract and the up-and-down direction of the body frame 21.

The down frame 212 of the body frame 21 is a tubular member that is disposed at a center between the right front wheel 31 and the left front wheel 32 in the left-and-right direction of the body frame 21. A front edge of the tubular member is a front edge of the down frame 212.

The body frame 21 is formed in such a way that an acute angle θLFUR that is formed by an imaginary line VLFUR that passes through the upper end UEFE and a rear end REF of a lower portion of the single tubular member that makes up the front edge FE of the down frame 212 and the up-and-down direction of the body frame 21 is smaller than the acute angle θSA that is formed by the turning axis SA of the steering shaft 60 and the up-and-down direction of the body frame 21. The body frame 21 is formed in such a way that the acute angle θLFUR that is formed by the imaginary line VLFUR that passes through the upper end UEFE of the front edge FE of the tubular member and the rear end REF of the lower portion of the tubular member and the up-and-down direction of the body frame 21 is smaller than the acute angle θSA that is formed by the turning axis SA of the steering shaft 60 and the up-and-down direction of the body frame 21. In a side view of the vehicle 1 that is resting in the upright state, the acute angle θLFUR that is formed by the imaginary line VLFUR that passes through the upper end UEFE of the front edge FE of the tubular member and the rear end REF of the lower portion of the tubular member and the up-and-down direction of the body frame 21 is smaller than the acute angle θSA that is formed by the turning axis SA of the steering shaft 60 and the up-and-down direction of the body frame 21.

### (Function and Advantage)

The link support portion 211 of the body frame 21 supports so as to turn the upper cross member 51 and the lower cross member 52 in such a way that the acute angle θVC that is formed by the imaginary plane VPVC that is perpendicular to the turning axis AUC of the upper cross member 51 and the turning axis ALC of the lower cross member 52 and the up-and-down direction of the body frame 21 is smaller than the acute angle θSA that is formed by the turning axis SA of the steering shaft 60 and the up-and-down direction of the body frame 21. This can reduce the rearward movement of the right front wheel 31 or the left front wheel 32 even though the link mechanism 5 is actuated to operate to thereby move the right front wheel 31 or the left front wheel 32 upwards.

In addition to the reduction in rearward movement of the right front wheel 31 or the left front wheel 32 when the link mechanism 5 is actuated to operate to thereby move the right front wheel 31 or the left front wheel 32 upwards, the down frame 212 (a vertical frame portion) of the body frame 21 is formed in such a way that the upper end UEFE of the front edge FE thereof is disposed further forwards than the imaginary plane VPTT that is parallel to the turning axis SA of the steering shaft 60 and that is brought into contact with the rear portions of the right front wheel 31 and the left front wheel 32 with the vehicle 1 resting in the upright state and that the width in the left-and-right direction between the upper end UEFE and the lower end LEFE of the front edge FE is formed smaller than the distance between the right front wheel 31 and the left front wheel 32. The rearward movement of the right front wheel 31 or the left front wheel 32, which occurs when the link mechanism 5 is actuated to operate to thereby move the right front wheel 31 or the left front wheel 32 upwards, is reduced. Further, the width in the left-and-right direction between the upper end UEFE and the lower end LEFE of the down frame 212 (the vertical frame portion) is reduced. Therefore, even though the upper end UEFE of the front edge FE of the down frame 212 (the vertical frame portion) is caused to move nearer to the right front wheel 31 and the left front wheel 32 in the front-and-rear direction of the body frame 21, the upper end UEFE of the front edge FE of the down frame 212 (the vertical frame portion) can be restricted from interfering with the right front wheel 31 and the left front wheel 32.

In addition to the fact that the upper end UEFE of the front edge FE of the down frame 212 (the vertical frame portion) is caused to lie nearer to the right front wheel 31 and the left front wheel 32 in the front-and-rear direction of the body frame 21, further, the down frame 212 (the vertical frame portion) is formed in such a way that the acute angle θLFUL that is formed by the imaginary line that passes through the upper end UEFE and the lower end LEFE of the down frame 212 (the vertical frame portion) and the up-and-down direction of the body frame 21 is smaller than the acute angle θSA that is formed by the turning axis SA of the steering shaft 60 and the up-and-down direction of the body frame 21. This enables the lower end LEFE of the front edge FE of the down frame 212 (the vertical frame portion) to lie nearer to the upper end UEFE of the front edge FE while restricting the interference of the down frame 212 (the vertical frame portion) with the right front wheel 31 and the left front wheel 32. Therefore, both the upper end UEFE and the lower end LEFE of the front edge FE of the down frame 212 (the vertical frame portion) are allowed to lie nearer to the left and right front wheels 31.

Consequently, an acute angle θLRT that is formed by moving loci VLRT of rear ends of the right front wheel 31 and the left front wheel 32 and the up-and-down direction of the body frame 21 and the acute angle θLFUL that is formed by the front edge FE of the down frame 212 (the vertical frame portion) and the up-and-down direction of the body frame 21 are both smaller than the acute angle θSA that is formed by the turning axis SA of the steering shaft 60 and the up-and-down direction of the body frame 21. This enables the moving loci VLRT of the rear ends of the right front wheel 31 and the left front wheel 32 and the front edge FE of the down frame 212 (the vertical frame portion) to lie near to each other in the front-and-rear direction of the body frame 21 while avoiding the interference of the body frame 21 with the right front wheel 31 and the left front wheel 32. This can reduce the wheelbase of the vehicle 1 to thereby make the size in front-and-rear direction of the vehicle 1 small. Further, the width in the left-and-right direction between the upper end UEFE and the lower end LEFE of the down frame 212 (the vertical frame portion) is reduced, and therefore, the upper end UEFE of the front edge FE of the down frame 212 (the vertical frame portion) can be restricted from interfering with the right front wheel 31 and the left front wheel 32 while restricting the increase in space between the right front wheel 31 and the left front wheel 32 that would otherwise result to dispose the down frame 212 (the vertical frame portion).

The moving loci VLRT of the rear ends of the right front wheel 31 and the left front wheel 32 and the front edge FE of the down frame 212 (the vertical frame portion) are allowed to lie nearer to each other in the front-and-rear direction of the body frame 21 while avoiding the interference of the body frame 21 with the right front wheel 31 and the left front wheel 32 by devising the link support portion 211 and the down frame 212 (the vertical frame portion) of the body frame21. This reduces the size in the front-and-rear direction of the vehicle 1, and therefore, this restricts the increase in size in the left-and-right direction of the vehicle 1.

Consequently, according to the configuration described above, it is possible to make small both the size in the left-and-right and front-and-rear directions of the vehicle 1 that includes the body frame 21 that can lean and the two front wheels.

In addition, the down frame 212 (the vertical frame portion) of the body frame 21 may be formed in such a way that the acute angle θLFUL that is formed by the imaginary line VLFUL that passes through the upper end UEFE and the lower end LEFE and the up-and-down direction of the body frame 21 is smaller than the acute angle θVC that is formed by the imaginary plane VPVC that is perpendicular to the turning axis AUC of the upper cross member 51 and the turning axis ALC of the lower cross member 52 and the up-and-down direction of the body frame 21.

As this occurs, the lower end LEFE of the front edge FE of the down frame 212 (the vertical frame portion) can be caused to lie nearer to the right front wheel 31 and the left front wheel 32. This enables the moving loci VLRT of the rear ends of the right front wheel 31 and the left front wheel 32 and the front edge FE of the down frame 212 (the vertical frame portion) to lie near to each other in the front-and-rear direction of the body frame 21 while avoiding the interference of the body frame 21 with the right front wheel 31 and the left front wheel 32. This can reduce the wheelbase of the vehicle 1 to thereby make the size in front-and-rear direction of the vehicle 1 small. Consequently, it is possible to make small in size in the left-and-right and front-and-rear directions of the vehicle 1 that includes the body frame 21 that can lean and the two front wheels.

In addition, the down frame 212 (the vertical frame portion) of the body frame 21 may be disposed in the position where the upper end UEFE lies nearer to the imaginary plane VPTT that is parallel to the turning axis SA of the steering shaft 60 and that is brought into contact with the rear portions of the right front wheel 31 and the left front wheel 32 with the vehicle 1 resting in the upright state than the turning axis SA of the steering shaft 60.

As this occurs, the upper end UEFE of the front edge FE of the down frame 212 (the vertical frame portion) can be disposed so as not to be too near to the right front wheel 31 and the left front wheel 32 in the front-and-rear direction of the body frame 21. This enables the moving loci VLRT of the rear ends of the right front wheel 31 and the left front wheel 32 and the front edge FE of the down frame 212 (the vertical frame portion) to lie near to each other in the front-and-rear direction of the body frame 21 while avoiding the interference of the body frame 21 with the right front wheel 31 and the left front wheel 32. This can reduce the wheelbase of the vehicle 1 to thereby make the size in front-and-rear direction of the vehicle 1 small. Consequently, it is possible to make small in size in the left-and-right and front-and-rear directions of the vehicle 1 that includes the body frame 21 that can lean and the two front wheels.

In addition to the fact that the moving loci VLRT of the rear ends of the right front wheel 31 and the left front wheel 32 and the front end FE of the down frame 212 (the vertical frame portion) to lie nearer to each other in the front-and-rear direction of the body frame 21 while avoiding the interference of the body frame 21 with the right front wheel 31 and the left front wheel 32, the right front wheel 31 and the left front wheel 32 may be configured in such a way that the upper ends of the right front wheel 31 and the left front wheel 32 come to lie further upwards than the upper end UEFE of the down frame 212 (the vertical frame portion) of the body frame 21 in the up-and-down direction of the body frame 21. Conventionally, in the event that the right front wheel 31 and the left front wheel 32 are allowed to move in the up-and-down direction largely, the right front wheel 31 and the left front wheel 32 are also allowed to move largely to the rear accordingly, thereby increasing the size in front-and-rear direction of the vehicle 1. However, the rearward moving amount of the right front wheel 31 and the left front wheel 32 in association with the movement thereof in the up-and-down direction is restricted, and therefore, the moving amount in the up-and-down direction of the right front wheel 31 and the left front wheel 32 can be increased. Consequently, the moving amount in the up-and-down direction of the right front wheel 31 and the left front wheel 32 can be increased while restricting the increase in size in the left-and-right and front-and-rear directions of the vehicle 1 including the body frame 21 that can lean and the two front wheels.

In addition, the right shock absorber 33 and the left shock absorber 35 may be provided in such a way that the acute angle θTA that is formed by the direction TA in which the right and left shock absorbers extend and contract and the up-and-down direction of the body frame 21 is the same as or smaller than the acute angle θSA that is formed by the turning axis SA of the steering shaft 60 and the up-and-down direction of the body frame 21. Conventionally, in the event that the shock absorbers are adopted which extend and contract largely, the right front wheel 31 and the left front wheel 32 tend to move rearwards largely, thereby increasing the size in front-and-rear direction of the vehicle 1. However, the rearward movement of the right front wheel 31 and the left front wheel 32 in association with the movement thereof in the up-and-down direction is restricted, and therefore, it is possible to adopt the shock absorbers that extend and contract largely while avoiding the interference of the body frame 21 with the right front wheel 31 and the left front wheel 32. Consequently, it is possible to adopt the shock absorbers that extend and contract largely while restricting the increase in size in the left-and-right and front-and-rear directions of the vehicle 1 including the body frame 21 that can lean and the two front wheels, thereby making it possible to increase the moving amount in the up-and-down direction of the right front wheel 31 and the left front wheel 32.

In addition, the link mechanism 5 may be provided in such a way that the acute angle θVC that is formed by the imaginary plane VPVC that is perpendicular to the turning axis AUC of the upper cross member 51 and the turning axis ALC of the lower cross member 52 and the up-and-down direction of the body frame 21 is smaller than the acute angle θTA that is formed by the direction TA in which the right shock absorber 33 and the left shock absorber 35 extend or contract and the up-and-down direction of the body frame 21. As this occurs, it is possible to adopt the shock absorbers that extend and contract more largely while restricting the increase in size in the left-and-right and front-and-rear directions of the vehicle 1 including the body frame 21 that can lean and the two front wheels, thereby making it possible to increase more the moving amount in the up-and-down direction of the right front wheel 31 and the left front wheel 32.

In addition, the down frame 212 (the vertical frame portion) of the body frame 21 may include the single tubular member that makes up the front edge FE thereof and that is disposed at the center between the right front wheel 31 and the left front wheel 32 in the left-and-right direction of the body frame 21.

As this occurs, the front edge FE of the down frame 212 (the vertical frame portion) of which the front edge FE is allowed to lie near to the moving loci VLRT of the rear ends of the right front wheel 31 and the left front wheel 32 while restricting the interference of the body frame 21 with the right front wheel 31 and the left front wheel 32 is made up of the single tubular member. The front edge FE of the down frame 212 (the vertical frame portion) that lies near to the rear ends of the right front wheel 31 and the left front wheel 32 is made up of the single tubular member that can be made compact while ensuring its rigidity. Therefore, the moving loci VLRT of the rear ends of the right front wheel 31 and the left front wheel 32 and the front edge FE of the down frame 212 (the vertical frame portion) can be made to lie nearer to each other in the front-and-rear direction of the body frame 21 while avoiding the interference of the body frame 21 with the right front wheel 31 and the left front wheel 32. This can reduce the wheelbase of the vehicle 1 to thereby make the size in front-and-rear direction of the vehicle 1 small. Consequently, it is possible to make small in size in the left-and-right and front-and-rear directions of the vehicle 1 that includes the body frame 21 that can lean and the two front wheels.

Additionally, the body frame 21 may be formed in such a way that the acute angle θLFUR that is formed by the imaginary line VLFUR that passes through the upper end UEFE and the rear end REF of the lower portion of the single tubular member that makes up the front edge FE of the down frame 212 (the vertical frame portion) and the up-and-down direction of the body frame 21 is smaller than the acute angle θSA that is formed by the turning axis SA of the steering shaft 60 and the up-and-down direction of the body frame 21.

As this occurs, the rear end REF of the lower portion of the down frame 212 (the vertical fame portion) is disposed so as to lie near to the right front wheel 31 and the left front wheel 32. This enables the moving loci VLRT of the rear ends of the right front wheel 31 and the left front wheel 32 and the front edge FE of the down frame 212 (the vertical frame portion) to lie near to each other in the front-and-rear direction of the body frame 21 while avoiding the interference of the body frame 21 with the right front wheel 31 and the left front wheel 32. This can reduce the wheelbase of the vehicle 1 to thereby make the size in front-and-rear direction of the vehicle 1 small. Consequently, it is possible to make small in size in the left-and-right and front-and-rear directions of the vehicle 1 that includes the body frame 21 that can lean and the two front wheels.

### <Overall Configuration>

As shown in Fig. 1, the vehicle 1 includes a vehicle main body portion 2, the front wheels 3, a rear wheel 4, a steering mechanism 7 and the link mechanism 5. The vehicle main body portion 2 is made up mainly of the body frame 21, a body cover 22, the handlebar 23, a seat 24, and a power unit 25.

The body frame 21 supports the power unit 25, the sheet 24 and the like. The power unit 25 includes an engine, a transmission, and the like. In Fig. 1, the body frame 21 is shown by broken lines.

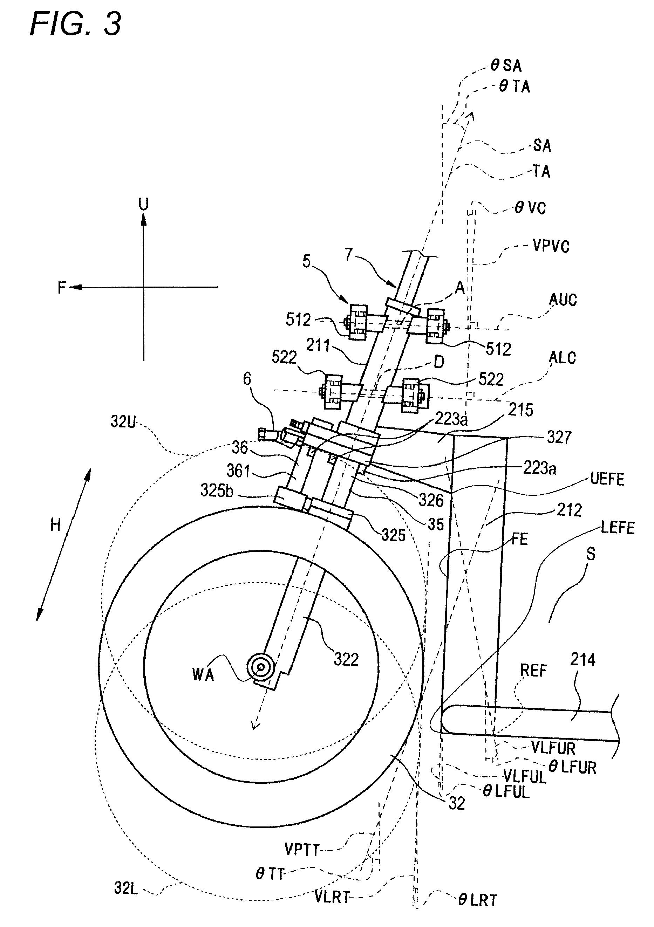

The body frame 21 includes a headstock (an example of a link support portion) 211, a connecting member 215 (an example of an upper longitudinal frame portion), the down frame (an example of a vertical frame portion) 212, an under frame (an example of a lower longitudinal frame portion) 214, and a rear frame 213. The headstock 211 is disposed at a front portion of the vehicle. In the side view of the vehicle, the headstock 211 is disposed so as to be slightly inclined towards the rear of the vehicle with respect to a vertical direction. Namely, the headstock 211 is disposed to extend along a direction indicated by an arrow H in Fig. 3.

The steering mechanism 7 and the link mechanism 5 are disposed on the periphery of the headstock 211. The steering shaft 60 is inserted into the headstock 211 so as to turn therein. The steering shaft 60 extends substantially in the up-and-down direction. The handlebar 23 is attached to an upper end portion of the steering shaft 60.

The connecting member 215 extends from a lower portion of the headstock 211 towards the rear in the front-and-rear direction of the body frame 21. The down frame 212 extends downwards in the up-and-down direction of the body frame 21 from a rear portion of the connecting member 215. The under frame 214 extends to the rear from a lower portion of the down frame 212. The rear frame 213 supports the seat 24, a tail lamp, and the like.

The body frame 21 is covered by the body cover 22. The body cover 22 includes a front cover 221, front fenders 223 (an example offenders), a rear fender 224, and a leg shield 225.

The front cover 221 is positioned to lie further forwards than a front end of the seat 24. The front cover 221 covers at least part of the steering mechanism 7. The front cover 221 covers at least part of the link mechanism 5.

The front fenders 223 are disposed directly below the front cover 221. The front fenders 223 are provided individually directly above the pair of left and right front wheels 3. The rear fender 224 is disposed directly above the rear wheel 4. The leg shield 225 is provided so as to cover the down frame 212.

The front wheels 3 are disposed further downwards of the headstock 211. The front wheels 3 are disposed below the front cover 221. The rear wheel 4 is disposed below the body cover 22.

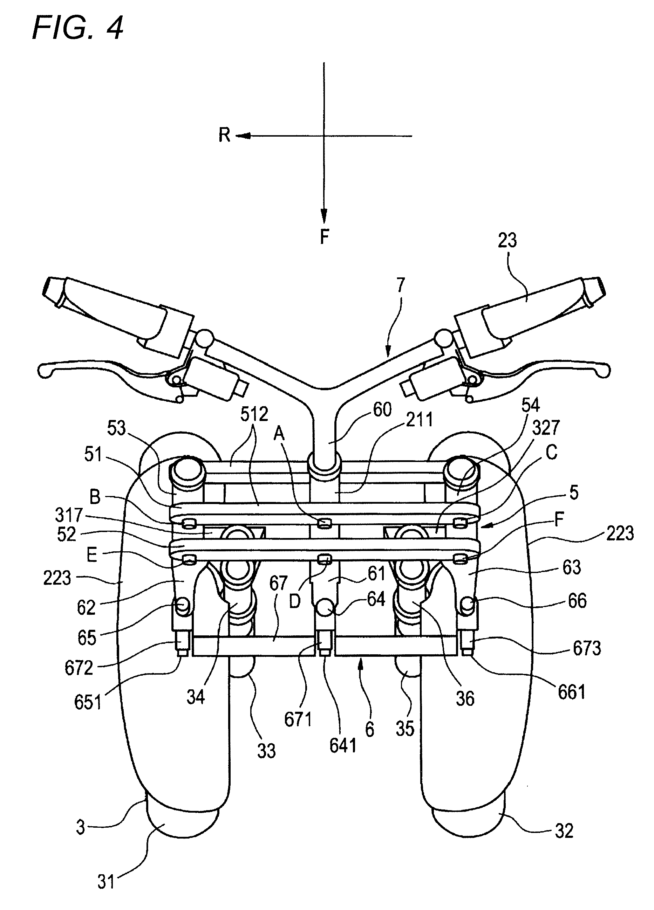

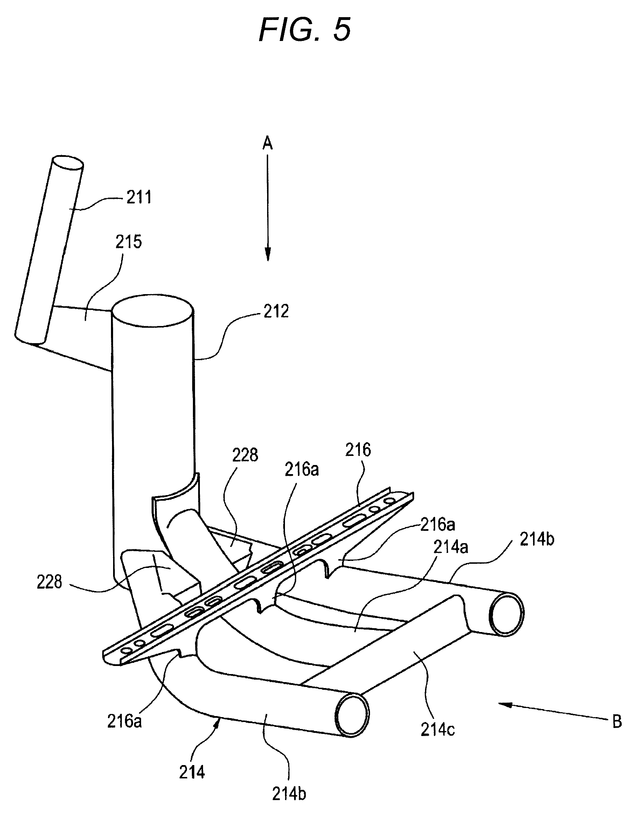

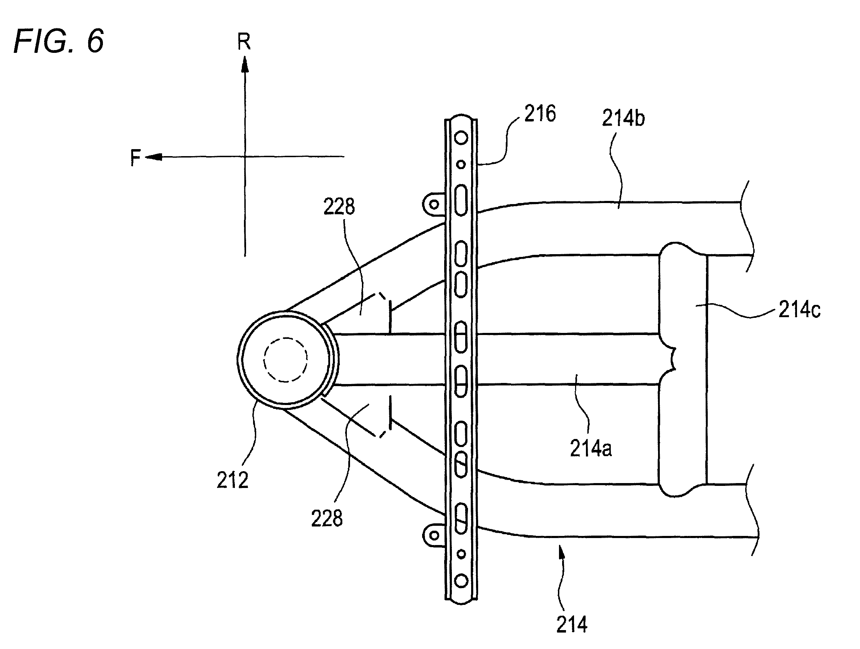

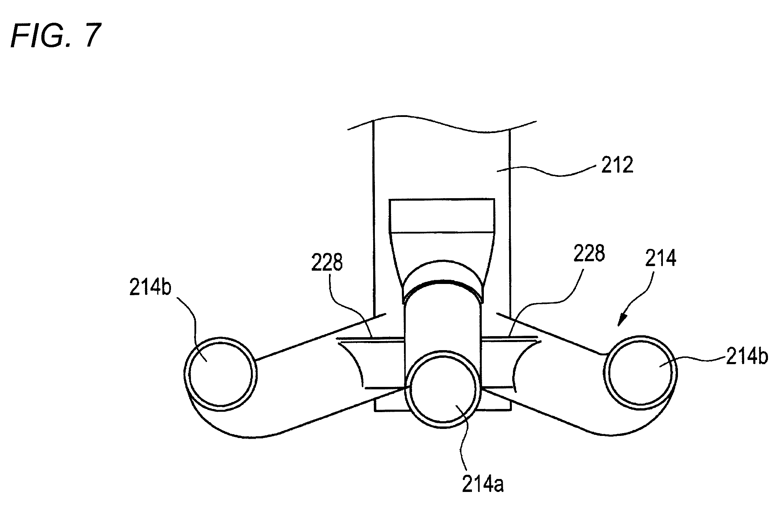

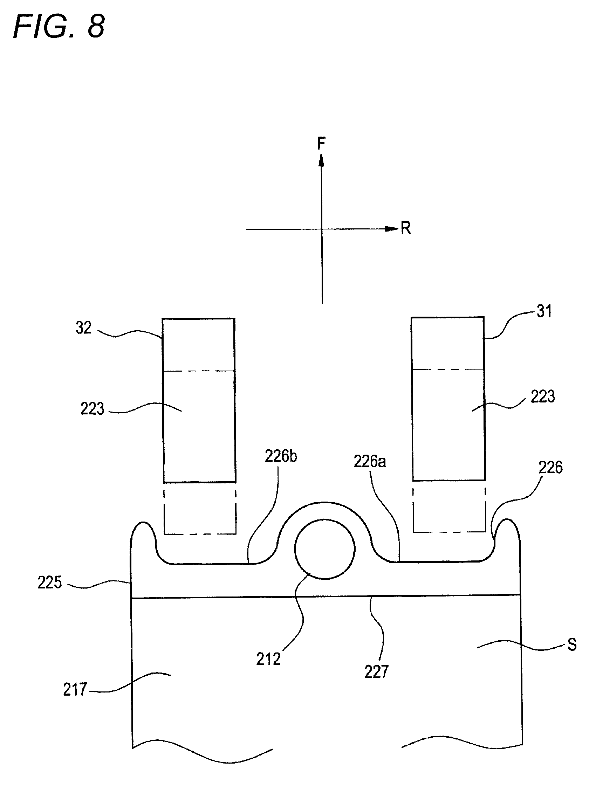

The steering mechanism 7, the link mechanism 5 and the body cover 22 will be described below. Fig. 2 is an overall front view of the vehicle 1 with the body cover 22 and the front fenders 223 removed. Fig. 3 is a partial side view of the vehicle 1 with the body cover 22 and the front fenders 223 removed. FIG. 4 is a partial plan view of the vehicle 1 with the body cover 22 removed. Fig. 5 is a perspective view of a front portion of the body frame. Fig. 6 is a view as seen in a direction indicated by an arrow A in Fig. 5. Fig. 7 is a view as seen in a direction indicated by an arrow B in Fig. 5. Fig. 8 is a schematic sectional view taken horizontally along the front portion of the vehicle.

### <Steering Mechanism>

As shown in Figs. 2 to 4, the steering mechanism 7 includes the handlebar 23, the steering shaft 60, an operation force transfer mechanism 6, the right shock absorber 33, a first turning preventing mechanism 34, the left shock absorber 35, a second turning preventing mechanism 36, the pair of left and right front wheels 3, a first bracket 317, a second bracket 327, and the like.

The front wheels 3 include the right front wheel 31 and the left front wheel 32. The right front wheel 31 is disposed on the right of the headstock 211 in relation to the left-and-right direction of the body frame 21 as seen from the front of the vehicle. The front fender 223 is disposed above the right front wheel 31. The left front wheel 32 is disposed on the left of the headstock 211 in relation to the left-and-right direction of the body frame 21 as seen from the front of the vehicle. The front fender 223 is disposed above the left front wheel 32.

The right shock absorber 33 includes a first outer tube 312. The right front wheel 31 is supported by the first outer tube 312. The right front wheel 31 is connected to a lower portion of the first outer tube 312. The first outer tube 312 has a first support shaft 314 at the lower portion thereof. The first support shaft 314 supports the right front wheel 31. The first outer tube 312 extends in the up-and-down direction of the body frame 21.

The first turning preventing mechanism 34 includes a first guide 313. The first guide 313 is disposed at an upper portion of the first outer tube 312. The first guide 313 is fixed to the upper portion of the first outer tube 312. The right front wheel 31 can turn about a first center axis X. The right front wheel 31 can turn about the first center axis X to change its direction.

The left shock absorber 35 includes a second outer tube 322. The left front wheel 32 is supported by the second outer tube 322. The left front wheel 32 is connected to a lower portion of the second outer tube 322. The second outer tube 322 has a second support shaft 324 at the lower portion thereof. The second support shaft 324 supports the left front wheel 32. The second outer tube 322 extends in the up-and-down direction of the body frame 21.

The second turning preventing mechanism 36 includes a second guide 323. The second guide 323 is disposed at an upper portion of the second outer tube 322. The second guide 323 is fixed to the upper portion of the second outer tube 322. The second front wheel 32 turns about a second center axis Y. The left front wheel 32 can turn about the second center axis Y to change its direction.

The right shock absorber 33 is a so-called telescopic shock absorber and dampens vibrations from a road surface. The right shock absorber 33 includes the first outer tube 312 and a first inner tube 316. The first inner tube 316 is disposed above the first outer tube 312. Part of the first inner tube 316 is inserted into the first outer tube 312. The first inner tube 316 can move relative to the first outer tube 312 in relation to the direction in which the first outer tube 312 extends. An upper portion of the first inner tube 316 is fixed to the first bracket 317.

The first turning preventing mechanism 34 prevents the turning of the first outer tube 312 relative to the first inner tube 316. The first turning preventing mechanism 34 includes the first guide 313, a first turning preventing rod 341, and the first bracket 317. The first guide 313 guides the first turning preventing rod 341 in a direction in which it moves. The first guide 313 includes a first guide tube 313b. The first turning preventing rod 341 is inserted into the first guide tube 313b. The first turning preventing rod 341 can move relative to the first guide tube 313b. The first turning preventing rod 341 prevents the relative turn of the right front wheel 31 to the first inner tube 316. The first turning preventing rod 341 is disposed parallel to the right shock absorber 33. An upper portion of the first turning preventing rod 341 is fixed to the first bracket 317. The first turning preventing rod 341 cannot move relative to the first inner tube 316. The first bracket 317 fixes the first inner tube 316 and the first turning preventing rod 341 in place.

The left shock absorber 35 is a so-called telescopic shock absorber and dampens vibrations from the road surface. The left shock absorber 35 has a symmetric configuration in the left-and-right direction, which is similar to that of the right shock absorber 33. The left shock absorber 35 includes the second outer tube 322 and a second inner tube 326. An upper portion of the second inner tube 326 is fixed to the second bracket 327.

The second turning preventing mechanism 36 prevents the relative turning of the second outer tube 322 to the second inner tube 326. The second turning preventing mechanism 36 has a symmetric configuration in the left-and-right direction, which is similar to the first turning preventing mechanism 34. The second turning preventing mechanism 36 includes the second guide 323, a second guide tube 323b, a second turning preventing rod 361, and the second bracket 327. The second turning preventing rod 361 is disposed parallel to the left shock absorber 35 and prevents the relative turning of the left front wheel 32 to the second inner tube 326.

The right shock absorber 33 and the left shock absorber 35 extend and contract when the vehicle is accelerated or decelerated or is running on a rough road.

The operation force transfer mechanism 6 includes the steering shaft 60, a first transfer plate 61, a second transfer plate 62, a third transfer plate 63, a first joint 64, a second joint 65, a third joint 66, a tie-rod 67, the first bracket 317, and the second bracket 327.

The operation force transfer mechanism 6 transfers an operation force exerted on the handlebar 23 by the rider as a result of the rider operating the handlebar 23 to the right front wheel 31 and the left front wheel 32. The operation force transfer mechanism 6 is disposed further upwards than the right front wheel 31 and the left front wheel 32.

The first transmission plate 61 is connected to the steering shaft 60. The first transmission plate 61 is not allowed to turn relative to the steering shaft 60. When the handle 23 is turned relative to the headstock 211, the steering shaft 60 turns relative to the headstock 211. The first transfer plate 61 turns as the steering shaft 60 turns.

The second transfer plate 62 is connected to the right side member 53. The second transfer plate 62 is turnably connected to the right side member 53. The second transfer plate 62 is fixed to the first bracket 317. The second transfer plate 62 is disposed further downwards of the first bracket 317.

The third transfer plate 63 is connected to the left side member 54. The third transfer plate 63 is turnably connected to the left side member 54. In a front view, the third transfer plate 63 is disposed symmetrical with the second transfer plate 62 with respect to the first transfer plate 61. The third transfer plate 63 is fixed to the second bracket 327. The third transfer plate 63 is positioned to lie further downwards of the second bracket 327.

The tie-rod 67 transfers the operation force that is transferred thereto from the steering shaft 60 to the first bracket 317 and the second bracket 327. The tie-rod 67 extends in the left-and-right direction of the body frame 21. A width of a front portion of the first transfer plate 61 (a dimension in the left-and-right direction of the body frame 21) is narrower than a width of a rear portion of the first transfer plate 61. The first joint 64 is disposed at the front portion of the first transfer plate 61. A width of a front portion of the second transfer plate 62 is narrower than a width of a rear portion of the second transfer plate 62. The second joint 65 is disposed at the front portion of the second transfer plate 62. The second transfer plate 62 is disposed to the right of the first transfer plate 61. A width of a front portion of the third transfer plate 63 is narrower than a width of a rear portion of the third transfer plate 63. The third joint 66 is disposed at the front portion of the third transfer plate 63. The third transfer plate 63 is disposed to the left of the first transfer plate 61.

The tie-rod 67 includes a first front rod 641, a second front rod 651, and a third front rod 661. The first front rod 641 is supported at the first joint 64 so as to turn relative to the first transfer plate 61. The first front rod 641 is provided at a middle of the tie-rod 67 in relation to the left-and-right direction of the body frame 21. The second front rod 651 is supported at the second joint 65 so as to turn relative to the second transfer plate 62. The second front rod 651 is disposed to the right of the first front rod 641. The third front rod 661 is supported at the third joint 66 so as to turn relative to the third transfer plate 63. The third front rod 661 is disposed to the left of the first front rod 641.

The tie-rod 67 includes a first ring 671, a second ring 672, and a third ring 673. The first front rod 641 is inserted through the first ring 671 to make up a fourth joint. The second front rod 651 is inserted through the second ring 672 to make up a fifth joint. The third front rod 661 is inserted through the third ring 673 to make up a sixth joint.

### <Link Mechanism>

As shown in Figs. 2 to 4, the link mechanism 5 is disposed below the handlebar 23. The link mechanism 5 is disposed above the right front wheel 31 and the left front wheel 32. The link mechanism 5 is supported on the headstock 211.

The upper cross member 51 is supported on the headstock 211 of the body frame 21 at a support portion A. The upper cross member 51 is supported on the body frame 21 so as to turn about a turning axis (the support portion A). The upper cross member 51 is supported on the headstock 211 so as to turn within a plane that contains the upper cross member 51 and the lower cross member 52. The upper cross member 51 is free to turn in the left-and-right direction relative to the steering shaft 60. Even though the steering shaft 60 turns relative to the body frame 21 in association with the turn of the handlebar 23, the upper cross member 51 does not turn relative to the body frame 21.

The upper cross member 51 includes a pair of plate members 512. The upper cross member 51 extends in the left-and-right direction of the vehicle body frame 21. The pair of plate members 512 hold the headstock 211 therebetween in the front-and-rear direction of the body frame 21. A right portion of the upper cross member 51 is connected to the right side member 53 via a connecting portion B. The upper cross member 51 is connected to the right side member 53 so as to turn about a turning axis (the connecting portion B). A left portion of the upper cross member 51 is connected to the left side member 54 via a connecting portion C. The upper cross member 51 is attached to the left side member 54 so as to turn freely relative to the left side member 54 about a turning axis (the connecting portion C).

The lower cross member 52 is supported on the headstock 211 of the body frame 21 at a support portion D. The lower cross member 52 is supported on the body frame 21 so as to turn about a turning axis (the support portion D). The lower cross member 52 is disposed below the upper cross member 51 in the up-and-down direction of the body frame 21. The lower cross member 52 has the same length as that of the upper cross member 51 in relation to the left-and-right direction of the body frame 21. The lower cross member 52 is free to turn in the left-and-right direction relative to the steering shaft 60. Even though the steering shaft 60 turns relative to the body frame 21 in association with the turn of the handlebar 23, the lower cross member 52 does not turn relative to the body frame 21.

The lower cross member 52 includes a pair of plate members 522. The lower cross member 52 extends in the left-and-right direction. The pair of plate members 522 hold the headstock 211 therebetween in the front-and-rear direction of the body frame 21. A right portion of the lower cross member 52 is connected to the right side member 53 via a connecting portion E. The lower cross member 52 is connected to the right side member 53 so as to turn about a turning axis (the connecting portion E). A left portion of the lower cross member 52 is connected to the left side member 54 via a connecting portion F. The lower cross member 52 is connected to the left side member 54 so as to turn about a turning axis (the connecting portion F).

The right side member 53 is disposed on the right of the headstock 211 in relation to the left-and-right direction of the body frame 21. The right side member 53 extends in the up-and-down direction of the body frame 21. The right side member 53 extends in the direction in which the headstock 211 extends. The right side member 53 extends in the direction in which the steering shaft 60 extends.

The right side member 53 is disposed above the right front wheel 31. The right side member 53 is connected to the first bracket 317 at a lower portion thereof. The right side member 53 is attached to the first bracket 317 so as to turn about the first center axis X.

The first bracket 317 turns about a connecting portion where it is connected to the right side member 53 by turning the handlebar 23. Even though the first bracket 317 turns, the right side member 53 does not turn relative to the body frame 21. The right side member 53 is disposed further rightwards than the right shock absorber 33 in relation to the left-and-right direction of the body frame 21. The right side member 53 is disposed further upwards than the right shock absorber 33 in relation to the up-and-down direction of the body frame 21.

The left side member 54 is disposed on the left of the headstock 211 in relation to the left-and-right direction of the body frame 21. The left side member 54 extends in the up-and-down direction of the body frame 21. The left side member 54 extends in the direction in which the headstock 211 extends. The left side member 54 extends in the direction in which the steering shaft 60 extends.

The left side member 54 is disposed above the left front wheel 32 in relation to the up-and-down direction of the body frame 21. The left side member 54 is connected to the second bracket 327 at a lower portion thereof. The left side member 54 is attached to the second bracket 327 so as to turn about the second center axis Y.

The second bracket 327 turns about a connecting portion where it is connected to the left side member 54 by turning the handlebar 23. Even though the second bracket 327 turns, the left side member 54 does not turn relative to the body frame 21. The left side member 54 is disposed further leftwards than the left shock absorber 35 in relation to the left-and-right direction of the body frame 21. The left side member 54 is disposed further upwards than the left shock absorber 35 in relation to the up-and-down direction of the body frame 21.

An upper portion of the headstock 211 is held by the pair of plate members 512 in the front-and-rear direction of the body frame 21. A lower portion of the headstock 211 is held by the pair of plate members 522 in the front-and-rear direction of the body frame 21. In a side view of the body frame 21, the turning axis (the support portion A) extends so as to intersect the steering shaft 60. In a side view of the body frame 21, the turning axis (the support portion D) extends so as to intersect the steering shaft 60.

### (Body Frame)

As shown in Figs. 1 and 3, the body frame 21 includes the headstock (an example of a link support portion) 211, the down frame (an example of a vertical frame portion) 212, the under frame (an example of a lower longitudinal frame portion) 214, and the rear frame 213. The headstock 211 supports the link mechanism 5.

As shown in Figs. 5 to 7, an upper portion of the down frame 212 is connected to a rear portion of the lower portion of the headstock 211 via the connecting member 215. The down frame 212 extends in the up-and-down direction of the body frame. The under frame 214 includes a central under frame 214a and two side under frames 214b that are disposed to the left and right of the central under frame 214a in relation to the left-and-right direction of the body frame 21. Namely, the under frame 214 is made up of the three members. The central under frame 214a extends from a lower portion of the down frame 212 to the rear in the front-and-rear direction of the body frame 21. The side under frames 214b extends from the lower portion of the down frame 212 so as to extend individually in the leftward and rightward directions of the body frame 21 and then to extend towards the rear in the front-and-rear direction of the body frame 21.

The down frame 212 is given a flexural rigidity that is larger than those of the central under frame 214a and the side under frames 214b that make up the under frame 214. When referred to herein, the flexural rigidity means a flexural rigidity against bending resulting when a force is exerted in a direction that is perpendicular to an axial direction of each frame member (so-called primary bending) when each frame member is taken as a single element. For example, the flexural rigidity of the down frame 212 is made so larger by forming the down frame 212 thicker than any one of the central under frame 214a and the side under frames 214b. As seen from the left or right of the body frame 21, the down frame 212 stands substantially perpendicular to the under frame 214. The central under frame 214a and the side under frames 214b that make up the under frame 214 are aligned side by side along a horizontal direction.

Connecting members 228 that extend in the left-and-right direction of the body frame 21 are provided at the rear of the lower portion of the down frame 212 between the central under frame 214a and the side under frames 214b. The connecting members 228 connect together the central under frame 214a and the side under frames 214b. The connecting members 228 are formed of, for example, a metallic plate having high rigidity to connect a rear portion of the lower portion of the down frame 212 and front portions of the central under frame 214a and the side under frames 214b together. In this way, the rigidity at the connecting portion where the down frame 212 is connected to the under frame 214 is reinforced by the connecting members 228.

A reinforcement pipe 214c is provided so as to extend in the left-and-right direction of the body frame 21 between the side under frames 214b. The reinforcement pipe 214c is connected to the side under frames 214b at both ends thereof. A rear end of the central under frame 214a is connected to the reinforcement pipe 214c.

A bracket 216 is provided at an upper portion of the under frame 214. The bracket 216 is provided so as to extend along the width direction of the vehicle. The bracket 216 has fixing portions 216a that project downwards. The fixing portion 216a of the bracket 216 are fixed to the central under frame 214a and the side under frames 214b that make up the under frame 214. A foot rest plate 217 (refer to Fig. 1) is fixed to the bracket 216. The foot rest plate 217 is fixed to the bracket 216 to be disposed horizontally on the upper portion of the under frame 214. A space above the foot rest plate 217 constitutes a foot rest space S. The foot rest space S is defined so as to pierce in the left-and-right direction of the body frame 21 at the rear of the right front wheel 31 and the left front wheel 32 in the vehicle 1.

### (Body Cover)

As shown in Figs. 1 and 4, the body cover 22 includes the front cover 221, the front fenders 223 and the rear fender 224.

The front fender 223 is supported on the first bracket 317 or the second bracket 327 that makes up the steering mechanism 7. A plurality of stud bolts 223a that project downwards are provided on the first bracket 317 and the second bracket 327. The front fenders 223 are fixedly fastened individually to the first bracket 317 and the second bracket 327 so as not to turn relative thereto.

The front cover 221 of the body cover 22 includes a front portion 221a that is disposed further frontwards than the link mechanism 5. A lower end of the front portion 221 a of the front cover 221 is provided further upwards than upper ends of the right front wheel 31 and the left front wheel 32 in the side view of the vehicle 1. The front portion 221 a of the front cover 221 is provided further rearwards than front ends of the right front wheel 31 and the left front wheel 32 in a side view of the vehicle 1.

As shown in Fig. 8, the leg shield 225 that makes up part of the body cover 22 is provided so as to cover the down frame 212. The leg shield 225 has a front member 226 that faces the front of the vehicle and a rear member 227 that faces the rear of the vehicle. The front member 226 of the leg shield 225 has two recess portions 226a, 226b that are formed therein. The rear member 227 of the leg shield 225 is formed substantially into a flat surface. In the front view of the vehicle 1, the recess portion 226a of the front member 226 is disposed at the rear of the right front wheel 31 and the front fenders 223 that covers the right front wheel 31. In the front view of the vehicle 1, the recess portion 226b of the front member 226 is disposed at the rear of the left front wheel 32 and the front fenders 223 that covers the left front wheel 32.

### <Extending and Contracting Operations of Shock Absorbers>

As shown in Fig. 8, the front fenders 223 that cover the right front wheel 31 and the right front wheel 31 can move from a position resulting when the vehicle rests upright (a position indicated by solid lines in Fig. 8) to a position resulting when the right shock absorber 33 contracts to its maximum extent (a position indicated by dotted lines in Fig. 8) as a result of the vehicle being decelerated or running on a rough road. When the right shock absorber 33 extends or contracts, a range between the position where the right shock absorber 33 contracts to its maximum extent and a position where the right shock absorber 33 extends to its maximum extent constitutes a shock absorber movable range. When the left shock absorber 35 extends or contracts, the left front wheel 32 and the front fenders 223 that cover the left front wheel 32 can move in the same way as the right front wheel 31 and the front fenders 223 that covers the right front wheel 31 do.

### <Steering Operation>

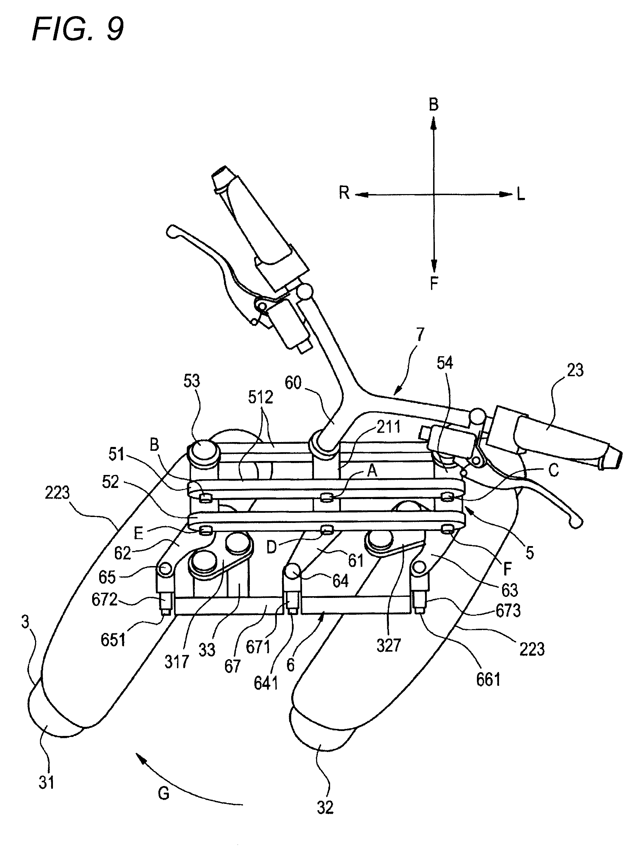

Fig. 9 is a partial plan view of the vehicle with the body cover removed, which depicts a steering operation.

As shown in Fig. 9, when the handlebar 23 is turned, the operation force transfer mechanism 6 of the steering mechanism 7 is actuated to operate, whereby a steering operation is performed. When the steering shaft 60 turns as a result of the handlebar 23 being turned, the first transfer plate 61 turns in association with the turning of the steering shaft 60. For example, when the steering shaft 60 turns in a direction indicated by an arrow G in Fig. 9, the tie-rod 67 moves to the right rear as the first transfer plate 61 turns. As this occurs, since the tie-rod 67 is turnably supported on the first transfer plate 61 via the first joint 64, the tie-rod 67 moves to the right rear while maintaining its posture. The second transfer plate 62 and the third transfer plate 63 turn in the direction indicated by the arrow G about the right side member 53 and the left side member 54, respectively, as the tie-rod 67 moves to the right rear.

When the second transfer plate 62 and the third transfer plate 63 turn in the direction indicated by the arrow G, the first bracket 317 and the second bracket 327 turn in the direction indicated by the arrow G. When the first bracket 317 and the second bracket 327 turn in the direction indicated by the arrow G, the right front wheel 31 turns about the first center axis X via the right shock absorber 33, and the left front wheel 32 turns about the second center axis Y via the left shock absorber 35.

In this steering operation, when the first bracket 317 and the second bracket 327 turn, the front fenders 223 that are fixed to the first bracket 317 and the second bracket 327 move accordingly to lean relative to the body frame 21 in the top view. In the steering operation by the steering mechanism, a range where the front fenders 223 turn as described above constitutes a front fender movable range, and a range where the front wheels turn as described above constitutes a front wheel movable range.

### <Leaning Operation>

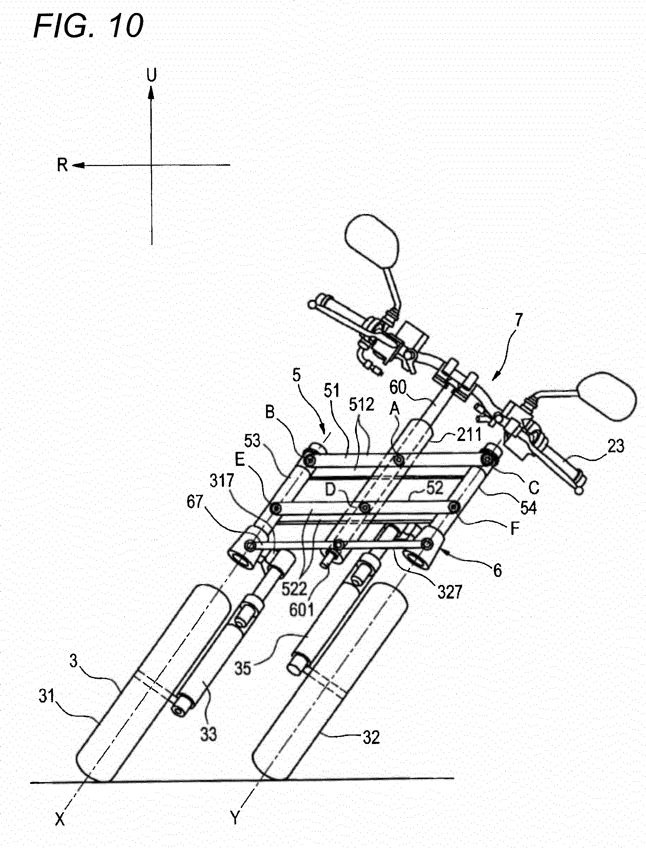

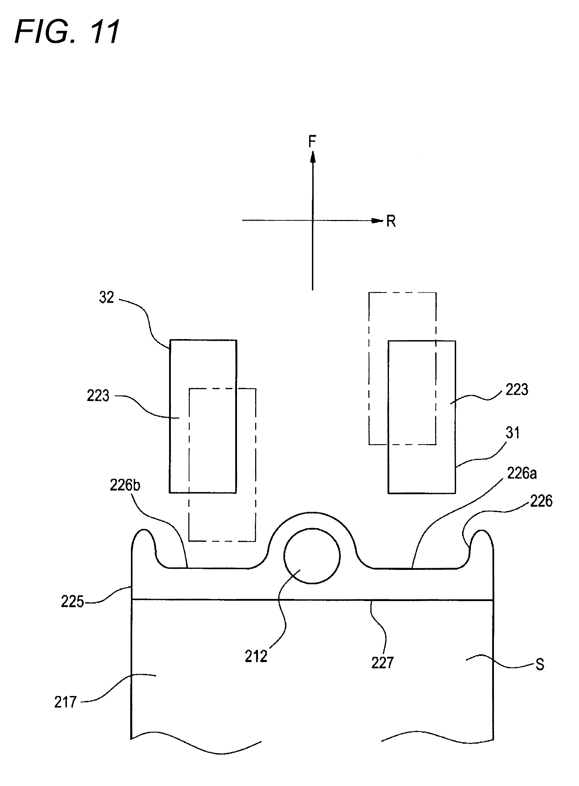

Fig. 10 is an overall front view of the vehicle with the body cover removed, which depicts a leaning operation of the vehicle. Fig. 11 is a schematic sectional view taken horizontally the front portion of the vehicle, which depicts the movement of the wheels and the like during the leaning operation of the vehicle.

As shown in Fig. 10, when the vehicle 1 leans to the left or right, the link mechanism 5 is actuated to operate. When the rider causes the vehicle 1 to lean to the left, the headstock 211 leans to the left with respect to the vertical direction. When the headstock 211 leans, the upper cross member 51 turns about the support portion A relative to the headstock 211, while the lower cross member 52 turns about the support portion D relative to the headstock 211. Then, the upper cross member 51 moves to the left more than the lower cross member 52, and the right side member 53 and the left side member 54 lean in parallel to the headstock 211 with respect to the vertical direction. When the right side member 53 and the left side member 54 lean, the right side member 53 and the left side member 54 turn relative to the upper cross member 51 and the lower cross member 52. Consequently, when the rider causes the vehicle 1 to lean, the right front wheel 31 and the left front wheel 32 that are supported on the right side member 53 and the left side member 54, respectively, lean individually in parallel to the headstock 211 with respect to the vertical direction as the right side member 53 and the left side member 54 lean.

In this leaning operation, the steering shaft 60 leans together with the headstock 211. In this leaning operation, the right side member 53 and the left side member 54 to which the first bracket 317 and the second bracket 327 are fixed, respectively, lean. Accordingly, this moves the front fenders 223 that are fixed to the first bracket 317 and the second bracket 327 to lean with respect to the vertical direction in a front view.

Fig. 11 shows a wheel and fender movable range of the right front wheel 31 and the front fender 223 that cover the right front wheel 31 and a wheel and fender movable range of the left front wheel 32 and the front fender 223 that covers the left front wheel 32 when the left side member 54 of the link mechanism 5 moves upwards, while the right side member 53 of the link mechanism 5 moves downwards in a leaning operation of the link mechanism 5.

As the link mechanism 5 operates, when the left side member 54 moves upwards along the headstock 211 (along a direction indicated by an arrow H in Fig. 3), the left front wheel 32 and the front fender 223 that covers the left front wheel 32 move to the right while also moving upwards along the headstock 211. When this operation is seen in the top view, as indicated by broken lines in Fig. 11, the left front wheel 32 and the front fender 223 that covers the left front wheel 32 move so as to approach the front member 226 of the leg shield 225 and the down frame 212 as the left side member 54 moves upwards along the headstock 211 (it is noted that the position of the left front wheel 32 when the vehicle rests upright is indicated by solid lines in Fig. 11). In addition, as this occurs, the left front wheel 32 and the front fender 223 that covers the left front wheel 32 are disposed within the recess portion 226b. Additionally, as this occurs, a front end portion of the down frame 212 lie further forwards than rear end portions of the left front wheel 32 and the front fender 223 that covers the left front wheel 32.

In addition, as this occurs, the right front wheel 31 and the front fender 223 that covers the right front wheel 31 move so as to move away from the front member 226 of the leg shield 225 as a result of the right side member 53 moving downwards along the headstock 211 (along the direction indicated by the arrow H in Fig. 3) in association with the operation of the link mechanism 5.

Additionally, on the contrary to the operation described above, when the link mechanism 5 operates in such a way that the left side member 54 moves downwards while the right side member 53 moves upwards, the left front wheel 32 and the front fender 223 that covers the left front wheel 32 move so as to move away from the front member 226 of the leg shield 225, while the right front wheel 31 and the front fender 223 that covers the right front wheel 31 move so as to move towards the front member 226 of the leg shield 225. As this occurs, the right front wheel 31 and the front fender 223 that covers the right front wheel 31 are disposed within the recess portion 226a.

### <Wheel and fender Movable Range>

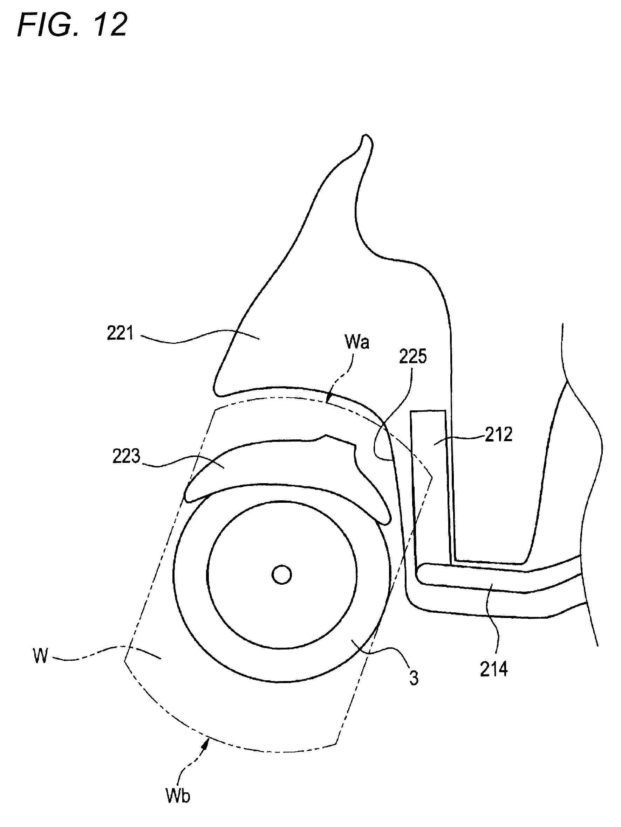

Fig. 12 shows a wheel and fender movable range W of the front wheel 3 and the front fender 223 that covers the front wheel. The front wheel 3 and the front fender 223 that covers the front wheel 3 can move over a constant range in association with at least one of the operations of the steering operation of the steering mechanism 7, the leaning operation of the link mechanism 5 and the extending and contracting operation of the shock absorber. Reference character Wa denotes a nearest position where the front wheel 3 and the front fender 223 that covers the front wheel move nearest to the leg shield 225. Reference character Wb denotes a farthest position where the front wheel 3 and the front fender 223 that covers the front wheel move farthest away from the leg shield 225.

As shown in Fig. 12, as seen from the left or right of the body frame 21, part of an upper portion of the down frame 212 overlaps the wheel and fender movable range W of the front wheel 3 and the front fender 223 that covers the front wheel 3.

Thus, as has been described heretofore, according to the vehicle 1 of this embodiment, the down frame 212 is connected to the headstock 211 and extends rearwards and downwards from the connecting portion. Further, as seen from the left or right of the body frame 21, the down frame 212 is disposed in such a way that part of the down frame 212 overlaps the wheel movable ranges of the two front wheels 3 and the fender movable ranges of the front fenders 223 that cover a part of the two front wheels 3. By adopting this configuration, the down frame 212 is disposed in the position lying near to the two front wheels 3 and takes the substantially vertical posture. In this way, the portion of the body frame 21 that lies at the rear of the two front wheels 3 can be disposed further forwards than in the conventional configuration, and therefore, the foot rest space S that pierces in the left-and-right direction at the rear of the two front wheels 3 can be ensured wide. Consequently, the difficulty in riding on and off the vehicle can be mitigated to thereby improve the riding on and off operation by the rider.

In the configuration in which the turning shafts of the link mechanism 5 of which the weight tends to be increased are disposed above the front wheels 3, a force in the front-and-rear direction transferred via the link mechanism 5 is borne by the body frame 21. This requires the body frame 21 to be highly rigid. For example, as in the conventional configuration, in the event that the upper frame is deleted simply, it becomes difficult to bear the force in the front-and-rear direction. However, the down frame 212 of this embodiment has the flexural rigidity that is larger than that of any one of the central under frame 214a and the side under frames 214b that make up the under frame 214, and therefore, it is possible to ensure the flexural rigidity that is sufficient to bear the force in the front-and-rear direction without providing the upper frame that is provided in the conventional configuration. Consequently, it is possible to ensure the sufficient rigidity for the force in the front-and-rear direction while ensuring the wide foot rest space S that pierces in the left-and-right direction at the rear of the right front wheel 31 and the left front wheel 32.

In this embodiment, as seen from the left or right of the body frame 21, the down frame 212 is made to stand substantially perpendicularly relative to the down frame 214, whereby it is possible to ensure the wide foot rest space S that pierces in the left-and-right direction at the rear of the right front wheel 31 and the left front wheel 32. Consequently, the difficulty in riding on and off the vehicle can be mitigated to thereby improve the riding on and off operation by the rider.

In this embodiment, the central under frame 214a and the side under frames 214b that make up the under frame 214 are aligned side by side along the horizontal direction, whereby it is possible to place the flat foot rest plate 217 on the under frame 214, thereby making it possible to provide a good riding condition with the feet of the rider resting on the foot rest plate 217 when the rider rides on the vehicle.

In this embodiment, the rear member 227 of the leg shield 225 of the body cover 22 that covers the down frame 212 is formed substantially into the flat surface, whereby there is caused no such situation that the body cover 22 interrupts the riding on or off operation of the rider when the rider rides on or off the vehicle. Thus, the rider can ride on or off the vehicle easily.

Additionally, the body frame 22 of this embodiment has the connecting portions 228 that are provided at the lower portion of the down frame 212 and that have portions where the connecting portions 228 are connected to the plurality of under frames 214. Additionally, at the lower portion of the down frame 212, the connecting portion is formed. The connecting portion includes the connecting members 228, a portion where the lower portion of the down frame 212 and the connecting members 228 are connected together and a portion where the front portion of the under frame 214 and the connecting members 228 are connected together. In a side view of the vehicle, the down frame 212 and the plurality of under frames 214 (214a, 214b) are disposed substantially at right angles to each other. The flexural rigidity of the down frame 212 is larger than the flexural rigidity of any one of the plurality of under frames 214. The flexural rigidity in the front-and-rear direction of the connecting portion is larger than the flexural rigidity in the front-and-rear direction of the down frame 212. The flexural rigidity of the connecting portion in the up-and-down direction is larger than a total of the flexural rigidities of the plurality of under frames 214 in the up-and-down direction.

In the configuration described above, there may be a case where the forces transferred to the down frame 212 are concentrated at the connecting portion. However, the connecting portion has the flexural rigidity in the front-and-rear direction that is larger than the flexural rigidity in the front-and-rear direction of the down frame 212, and therefore, the connecting portion is difficult to be deformed and hence can support the down frame 212 strongly and rigidly. Further, there may be a case where part of the forces that are transferred to the down frame 212 is transferred to the under frame 214, exerting the force in the up-and-down direction to the under frame 214. However, the flexural rigidity of the connecting portion in the up-and-down direction is larger than the total of the flexural rigidities of the plurality of under frames 214 in the up-and-down direction, and therefore, the connecting portion is difficult to be deformed and can support the under frame 214 strongly and rigidly.

In this way, with the body frame 212 of this embodiment, it is possible to ensure the flexural rigidity that is sufficient to bear the forces that are transferred from the front portion of the vehicle (something like a flexural rigidity that causes other portions to be deformed before the connecting portion is deformed) without providing the conventional upper frame. It is possible to ensure the flexural rigidity that is sufficient to bear forces exerted, for example, when the vehicle runs on a rough road. Further, the portion that supports the link mechanism 5 of the body frame 22 and that extends rearwards and downwards is disposed further forwards than the conventional corresponding portion, and therefore, the down frame 212 can be disposed further forwards than in the conventional configuration. This can ensure the wide foot rest space that pierces in the left-and-right direction at the rear of the front wheels 3.

The total of the flexural rigidities of the plurality of under frames 214 may be larger or smaller than the flexural rigidity of the down frame 212.

Additionally, as the form of the connecting portion, a plurality of forms can be raised, including a form in which the down frame 212 and the under frame 214 are not welded together directly but are connected together via a gusset structure, a form in which the under frame 214 is welded directly to the down frame 212 within a gusset structure, and the like.

In the embodiment, while as seen from the left or right of the body frame 21, part of the down frame 212 is disposed so as to overlap the two front wheels 3 and the front fenders 223 when the right shock absorber 33 or the left shock absorber 35 extends or contracts largely while the vehicle is being decelerated or is running on a rough road or the link mechanism 5 is actuated to operate, the down frame 212 may be disposed so that part thereof overlaps the front wheels 3 and the front fenders 223 as seen from the left or right of the body frame 21 with the vehicle resting in the upright state. Additionally, a configuration may be adopted in which the down frame 212 is disposed so that part thereof overlaps the wheel and fender movable ranges of the front wheels 3 and the front fenders 223 in such a state that the rider rides on the vehicle that is stopped and the vehicle body sinks downwards.

In addition, in the embodiment, while the down frame 212 is disposed so that part thereof overlaps the wheel and fender movable ranges of the two front wheels 3 and the front fenders 223 as seen from the left or right of the body frame 21, the down frame 212 may be disposed so that part thereof overlaps either of the wheel and fender movable ranges of the two front wheels 3 and the front fenders 223.

In addition, in the embodiment, while the under frame 214 is described as being made up of the three sub-frames such as the central under frame 214a and the two side under frames 214b, the number of sub-frames is not limited thereto. The under frame 214 may be made up of only a single sub-frame, which is, for example, the central under frame 214a.

Thus, while the invention has been described in detail and by reference to the specific embodiment, it is obvious to those skilled in the art to which the invention pertains that various alterations and/or modifications can be made thereto without departing from the spirit and scope of the invention.

In the body frame of the vehicle described in Patent Document 1 which includes the body frame that can lean and the two front wheels, the upper frame that extends to the rear of the vehicle body from the portion of the headstock that lies further upwards than the link mechanism and the lower frame that extends to the rear of the vehicle body from the portion of the headstock that lies further downwards than the link mechanism both extend as downward as below the seat.

In the body frame construction described above, a foot rest space S piercing in the left-and-right direction cannot be provided due to the existence of the upper frame. This requires the rider to straddle the vehicle body when the rider rides on the vehicle.

The vehicle 1 according to this embodiment that includes the body frame 21 that can lean and the two front wheels 3 includes the right front wheel 31 and the left front wheel 32 that are aligned in the left-and-right direction in the front view of the vehicle 1. The vehicle 1 includes the link mechanism 5 that includes the turning members 51, 52 that turn about the turning axes that are disposed above the right front wheel 31 and the left front wheel 32 and that performs the leaning operation as the turning members 51, 52 turn to thereby cause the right front wheel 31 and the left front wheel 32 to lean. The vehicle 1 includes the body frame 21 that has the first support portion that supports the link mechanism 5 and the second support portion that is connected to the first support portion and that extends rearwards and downwards from the connecting portion. Additionally, in the vehicle 1, as seen from the left or right of the body frame 21, part of the second support portion is caused to overlap at least either of the wheel movable range of the right front wheel 31 or the left front wheel 32 and the fender movable range of the front fender 223 that covers part of the right front wheel 31 or part of the left front wheel 32.

In the vehicle 1, the second support portion is connected to the first support portion and extends rearwards and downwards from the connecting portion. Further, as seen from the left or right of the body frame 21, part of the second support portion is disposed so as to overlap at least either of the wheel movable range of the right front wheel 31 or the left front wheel 32 and the fender movable range of the front fender 223 that covers part of the right front wheel 31 or part of the left front wheel 32. By adopting this configuration, the second support portion can be disposed in the position lying near to the right front wheel 31 and the left front wheel 32 while taking the nearly vertical posture. In this way, the portion of the body frame 21 that supports the link and that extends rearwards and downwards can be disposed further forwards than in the conventional configuration, and therefore, it is possible to ensure the foot rest space S that pierces in the left-and-right direction at the rear of the right front wheel 31 and the left front wheel 32. Consequently, the difficulty in riding on and off the vehicle can be mitigated to thereby improve the riding on and off operation by the rider.

In the vehicle 1, the body frame 21 is preferably such that the second support portion includes the plurality of third supports portions that extend to the rear from the lower portion of the second support portion and that the flexural rigidity of the second support portion is larger than the flexural rigidity of any one of the plurality of third support portions. In the configuration in which the turning axes of the link mechanism 5 of which the weight tends to be increased are disposed above the front wheels 3, a force in the front-and-rear direction transferred via the link mechanism 5 must be borne by the body frame 21. For example, in the conventional configuration, in the event that the upper frame is deleted simply, it becomes difficult to bear the force in the front-and-rear direction. However, the second support portion of the vehicle 1 of the invention has the flexural rigidity that is larger than the flexural rigidity of any one of the plurality of third support portions. Therefore, it is possible to ensure the flexural rigidity that is sufficient to bear the force in the front-and-rear direction described above without providing the upper frame as in the conventional configuration. Additionally, the plurality of third support portions are provided so as to extend to the rear from the lower portion of the second support portion, and therefore, it is possible to ensure the rigidity that is sufficient to bear the weight of the link mechanism 5 and the forces that are transferred from the front of the vehicle 1. Consequently, it is possible to ensure the sufficient rigidity for the force in the front-and-rear direction while ensuring the wide foot rest space that pierces in the left-and-right direction at the rear of the right front wheel 31 and the left front wheel 32.

In the vehicle 1, the plurality of third support portions are preferably aligned side by side along the horizontal direction. In the vehicle 1, it is easy to place the flat foot rest plate on the plurality of third support portions by aligning the third support portions side by side along the horizontal direction. Consequently, the rider can ride the vehicle with his or her feet resting on the foot rest plate.

In the vehicle 1, it is preferable that the second support portion is substantially perpendicular to the third support portions as seen from the left or right of the body frame 21. In the vehicle 1, as seen from the left or right of the body frame 21, the second support portion is made to stand substantially perpendicular to the third support portions, whereby it is possible to ensure the wide foot rest space that pierces at the rear of the right front wheel 31 and the left front wheel 32. Consequently, the difficulty in riding on and off the vehicle can be mitigated to thereby improve the riding on and off operation by the rider.

In the vehicle 1, a rear surface of the body cover 22 that covers the second portion preferably constitutes a flat surface. In the vehicle 1, the rear surface of the body cover 22 that covers the second support portion is formed into the substantially flat surface, whereby a front portion of the foot rest space S is made flat in the left-and-right direction, thereby making it possible to ensure the foot rest space S that is wider. Additionally, there is no such situation that the body cover 22 interrupts the riding of the rider on the vehicle, whereby the rider can ride on or off the vehicle easily. According to the invention, it is possible to provide the vehicle 1 that can provide the foot rest space S that pierces in the left-and-right direction.

### [Acute Angles]

In the invention and the embodiment, the acute angles are angles that include 0° and that are smaller than 90°. Originally, the acute angles do not include 0°, but in the invention and the embodiment, it is understood that the acute angles include 0°. In the embodiment, the imaginary plane that intersects perpendicularly the upper axes and the lower axes of the cross members is a plane that extends rearwards and upwards. However, the invention is not limited thereto, and hence, the imaginary plane that intersects perpendicularly the upper axes and the lower axes of the cross members may be a plane that extends forwards and upwards.

### [Parallel, Extend, Along]

When referred to in this description, "parallel" also includes two straight lines that do not intersect each other as members while they are inclined within the range of ± 10 degrees. When used together with a "direction" and a "member" in the invention, "along" also includes a case where what follows the direction and the member is inclined relative thereto within the range of ± 40 degrees. When used together with a "direction" in the invention, "extend" also includes a case where what extends is inclined relative to the direction within the range of ±40 degrees.

### [Four Wheels, Power Unit, Body Cover]

The vehicle according to the invention is the vehicle that includes the body frame that can lean and the two front wheels. The number of rear wheels is not limited to one, and hence, may be two. The vehicle may include the body cover that covers the body frame. The vehicle may not include the body cover which covers the body frame. The power unit includes the power source. The power source is not limited to the engine and hence may be an electric motor.

### [Headstock and Side Members]

In the embodiment described above, the right side portion 53, the left side portion 54 and the headstock 211 are provided in the positions that overlap one on another when seen from the left or right of the body frame 21. However, when seen from the left or right of the body frame 21, the headstock 211 may be provided in a different position from the positions where the right side member 53 and the left side member 54 are provided in relation to the front-and-rear direction. Additionally, angles at which the right side member 53 and the left side member 54 are inclined relative to the up-and-down direction of the body frame 21 may differ from an angle at which the headstock 211 is inclined.

### [Link Support Portion]

It is noted that the link support portion may be made up of a piece of part or a plurality of parts. In the case of the link support portion being made up of a plurality of parts, the parts may be joined together through welding, bonding or the like. Alternatively, the parts may be joined together with fastening members such as bolts, rivets or the like.

### [Cross Members, Side Members]

The upper cross member may include an upper front cross member that is made up of a single part, an upper rear cross member that is made up of a single part and a connecting member that is provided between the upper front and rear cross members and that is made up of a plurality of parts. In the case of the link support portion being made up of a plurality of parts, the parts may be joined together through welding, bonding or the like. Alternatively, the parts may be joined together with fastening members such as bolts, rivets or the like.

The lower cross portion may include a lower front cross member that is made up of a single part, a lower rear cross member that is made up of a single part and a connecting member that is provided between the lower front and rear cross members and that is made up of a plurality of parts. In the case of the link support portion being made up of a plurality of parts, the parts may be joined together through welding, bonding or the like. Alternatively, the parts may be joined together with fastening members such as bolts, rivets or the like.

The right side member and the left side member may each be made up of a single part or a plurality of parts. In the case of the link support portion being made up of a plurality of parts, the parts may be joined together through welding, bonding or the like. Alternatively, the parts may be joined together with fastening members such as bolts, rivets or the like. The right side member and the left side member may each include a portion that is disposed ahead of the upper cross member or the lower cross member in the front-and-rear direction of the vehicle body frame and a portion that is disposed behind the upper cross member or the lower cross member in the front-and-rear direction of the vehicle body frame. The upper cross member or the lower cross member may be disposed between the portions that are disposed at the front of the right side member and the left side member and the portions that are disposed at the rear of the right side member and the left side member.

### [Body Frame Configuration: Integral or Separate, Upper End of Front Edge when integral, Configuration of Upper and Lower Frame Portions]

In this embodiment, the body frame 21 has the link support portion 211, the connecting member 215 (the upper longitudinal frame portion), the down frame 212 (the vertical frame portion) and the under frame 214 (the lower longitudinal frame portion), and these constituent parts are connected together through welding. However, the body frame 21 of the invention is not limited to the embodiment. The body frame 21 should have the link support portion, the upper longitudinal frame portion, the vertical frame portion and the lower longitudinal frame portion. For example, the body frame 21 may be formed integrally wholly or partially through casting or the like. Additionally, in the body frame 21, the upper longitudinal frame portion and the vertical frame portion may be formed of a single member or separate members.

In the event that the upper longitudinal frame portion and the vertical frame portion are formed of a single member and that they are formed into a curved shape, as seen from the left or right of the body frame with the vehicle resting in the upright state, a portion where an acute angle that is formed by a tangent to a front edge of the curved body frame and the up-and-down direction of the body frame becomes 45 degrees is made to be an upper end of the vertical frame portion. Consequently, a portion where the acute angle formed by the tangent to the front edge of the curved body frame and the up-and-down direction of the body frame becomes equal to or smaller than 45 degrees is made to be the vertical frame portion, and a portion where the acute angle formed by the tangent to the front edge of the curved body frame and the up-and-down direction of the body frame becomes larger than 45 degrees is made to be the upper longitudinal frame portion

In the event that the lower longitudinal frame portion and the vertical frame portion are formed of a single member and that they are formed into a curved shape, as seen from the left or right of the body frame with the vehicle resting in the upright state, a portion where an acute angle that is formed by a tangent to a front edge of the curved body frame and the up-and-down direction of the body frame becomes 45 degrees is made to be a lower end of the vertical frame portion. Consequently, a portion where the acute angle formed by the tangent to the front edge of the curved body frame and the up-and-down direction of the body frame becomes equal to or larger than 45 degrees is made to be the vertical frame portion, and a portion where the acute angle formed by the tangent to the front edge of the curved body frame and the up-and-down direction of the body frame becomes larger than 45 degrees is made to be the lower longitudinal frame portion

The vertical frame portion of the body frame 21 should be formed in such a way that the upper end UEFE of the front edge FE thereof is disposed further forwards than the imaginary plane VPTT that is parallel to the turning axis SA of the steering shaft 60 and that is brought into contact with the rear portions of the right front wheel 31 and the left front wheel 32 with the vehicle 1 resting in the upright state, that the width in the left-and-right direction between the upper end UEFE and the lower end LEFE of the front edge FE is formed smaller than the distance between the right front wheel 31 and the left front wheel 32 and that the acute angle θLFUL that is formed by the imaginary line VLFUL that passes through the upper end UEFE and the lower end LEFE and the up-and-down direction of the body frame 21 is smaller than the acute angle θSA that is formed by the turning axis SA of the steering shaft 60 and the up-and-down direction of the body frame 21. For example, the vertical frame portion of the body frame 21 may be made of a plurality of frame members. For example, the vertical frame portion of the body frame 21 may have a frame member that makes up the front edge and the other frame member that is disposed further rearwards than the frame member

### [Shape of Vertical Frame Portion]

In this embodiment, the front edge FE of the down frame 212 of the body frame 21 is formed rectilinearly in the side view of the vehicle 1 resting in the upright state. However, the front edge of the vertical frame portion of the body frame of the invention is not limited to the embodiment. For example, the front edge of the vertical frame portion of the body frame may be curved or formed of a plurality of straight lines in the side view of the vehicle resting in the upright state.

### [Shape of Vertical Frame Portion]

In the embodiment, the down frame 212 of the body frame 21 is formed in such a way that the upper end UEFE lies further forwards than the lower end LEFE. However, the vertical frame portion of the body frame of the invention is not limited to the embodiment. The vertical frame portion of the body frame should be formed in such a way that the acute angle θLFUL that is formed by the imaginary line VLFUL that passes through the upper end UEFE and the lower end LEFE and the up-and-down direction of the body frame 21 is smaller than the acute angle θSA that is formed by the turning axis SA of the steering shaft 60 and the up-and-down direction of the body frame 21. For example, in the side view of the vehicle resting in the upright state, the upper end UEFE may lie in the same position as the lower end LEFE or the upper end UEFE may lie further rearwards than the lower end LEFE in the front-and-rear direction of the vehicle that is resting in the upright state.

In this invention, the acute angle θLFUL that is formed by the imaginary line VLFUL that passes through the upper end UEFE and the lower end LEFE and the up-and-down direction of the body frame 21 may be formed by inclining the imaginary line VLFUL that passes through the upper end UEFE and the lower end LEFE in such a way that an upper portion of the imaginary line VLFUL lies further forwards than the up-and-down direction of the body frame 21 or may be formed by inclining the imaginary line VLFUL that passes through the upper end UEFE and the lower end LEFE in such a way that the upper portion of the imaginary line VLFUL lies further rearwards than the up-and-down direction of the body frame 21 in the side view of the vehicle 1 resting in the upright state.

### <Modified Example to (2)>

In this embodiment, the down frame 212 of the body frame 21 is formed in such a way that the acute angle θLFUL that is formed by the imaginary line VLFUL that passes through the upper end UEFE and the lower end LEFE and the up-and-down direction of the body frame 21 is smaller than the acute angle θVC that is formed by the imaginary plane VPVC that is perpendicular to the turning axis AUC of the upper cross member 51 and the turning axis ALC of the lower cross member 52 and the up-and-down direction of the body frame 21. However, the invention is not limited to the embodiment. The vertical frame portion of the invention may be formed in such a way that the acute angle that is formed by the imaginary line VLFUL that passes through the upper end and the lower end thereof and the up-and-down direction of the body frame 21 is larger than or coincides with the acute angle θVC that is formed by the imaginary plane VPVC that is perpendicular to the turning axis AUC of the upper cross member 51 and the turning axis ALC of the lower cross member 52 and the up-and-down direction of the body frame.

### [Magnitude of Acute Angle: Steering Shaft and Telescopic Operation]

In this embodiment, the acute angle θSA formed by the turning axis SA of the steering shaft 60 and the up-and-down direction of the body frame 21 coincides with the acute angle θTA formed by the direction TA in which the right shock absorber 33 and the left shock absorber 35 extend or contract and the up-and-down direction of the body frame 21. However, the invention is not limited to the embodiment. For example, the acute angle θSA formed by the turning axis SA of the steering shaft 60 and the up-and-down direction of the body frame 21 may be smaller or larger than the acute angle θTA formed by the direction TA in which the right shock absorber 33 and the left shock absorber 35 extend or contract and the up-and-down direction of the body frame 21.

In addition, in the embodiment, the turning axis SA of the steering shaft 60 and the direction TA in which the right shock absorber 33 and the left shock absorber 35 extend or contact coincide with each other. However, the invention is not limited to the embodiment. In the side view of the vehicle resting in the upright state, the turning axis SA of the steering shaft 60 and the direction TA in which the right shock absorber 33 and the left shock absorber 35 extend or contact may be spaced away from each other in the front-and-rear direction. Additionally, for example, the turning axis SA of the steering shaft 60 and the direction TA in which the right shock absorber 33 and the left shock absorber 35 extend or contact may intersect each other.

### <Modified Example to (4)>

In this embodiment, the right front wheel 31 and the left front wheel 32 are supported so that their upper ends can move further upwards than the upper end UEFE of the down frame 212 of the body frame 21 in the up-and-down direction of the body frame 21. However, the invention is not limited to the embodiment. In this invention, the right front wheel 31 and the left front wheel 32 may be supported so that their upper ends can move upwards as high as or to a height that is lower than the upper end UEFE of the down frame 212 of the body frame 21 in the up-and-down direction of the body frame 21.

### [Cross Members]

In the invention, the link mechanism may include further a cross member in addition to the upper cross member and the lower cross member. The upper cross member and the lower cross member are so called only from their relative positional relationship in the up-and-down direction. The upper cross member is not necessarily an uppermost cross member of the link mechanism. The upper cross member means a cross member that lies upward than a cross member that lies downward thereof. The lower cross member is not necessarily a lowermost cross member of the link mechanism. The lower cross member means a cross member that lies downward than a cross member that lies upward thereof. Additionally, the cross member may be made up of two parts of a right cross member and a left cross member. In this way, the upper cross member and the lower cross member may each include a plurality of parts as long as they still make up the link function. Further, other cross members may be provided between the upper cross member and the lower cross member. The link mechanism should include the upper cross member and the lower cross member.

The invention can be embodied in many different forms. The disclosure herein should be regarded as providing one of embodiments that embody the principle of the invention. Based on the understanding that the preferred embodiment that is described and/or illustrated herein is not intended to limit the invention thereto, several embodiments are described and illustrated herein.

Several illustrated embodiments of the invention are described herein. The invention, which is defined by claim 1, is not limited to the various preferred embodiments that are described herein. The invention can include every embodiment that includes equivalent elements, modifications, deletions, combinations (for example, combinations of the characteristics of the various embodiments), improvements and/or alterations that those skilled in the art to which the invention pertains can think of. Matters limited by claims should be construed widely based on terms that are used in the claims and should not be limited to the embodiments described in this description or the prosecution of this patent application. Those embodiments should be construed as non-exclusive. For example, in this disclosure, such terms as "preferable" and "good" are non-exclusive terms and mean that "it is preferable but does not limit the invention thereto" and "it is good but does not limit the invention thereto," respectively.

This patent application is based on Japanese Patent Application No. 2012-279996 filed on December 21, 2012, Japanese Patent Application No. 2012-278879 filed on December 21, 2012, and Japanese Patent Application No. 2013-138481 filed on July 1, 2013.

### [Description of Reference Numerals]

1: vehicle (vehicle); 3: front wheel; 5: link mechanism; 21: body frame; 22: body cover; 31: right front wheel; 32: left front wheel; 211: headstock (an example of a first support portion); 212: down frame (an example of a second support portion); 214: under frame (an example of a third support portion); 214a: central under frame; 214b: side under frame; 223: front fender (an example of a fender); S: foot rest space.

## Claims

1. A vehicle (1), comprising:
a right front wheel (31) and a left front wheel (32) that are disposed in a left-and-right direction as seen from a rider driving the vehicle (1) and that can be steered by operating a handlebar (23);
a link mechanism (5) including:
an upper cross member (51) that is disposed above the right front wheel (31) and the left front wheel (32) with the vehicle (1) resting in an upright state;
a lower cross member (52) that is disposed further below the upper cross member (51) in an up-and-down direction of the vehicle (1) and that is disposed above the right front wheel (31) and the left front wheel (32);
a right side member (53) that is turnably supported on a right portion of the upper cross member (51) at an upper portion thereof, that is turnably supported on a right portion of the lower cross member (52) at a lower portion thereof, that is disposed above the right front wheel (31) and the left front wheel (32) and that supports the right front wheel (31); and
a left side member (54) that is turnably supported on a left portion of the upper cross member (51) at an upper portion thereof, that is turnably supported on a left portion of the lower cross member (52) at a lower portion thereof, that is disposed above the right front wheel (31) and the left front wheel (32) and that supports the left front wheel (32),
a body frame (21) that can lean in the left-and-right direction of the vehicle (1) and includes:
a link support portion (211) that turnably supports at a middle portion of the upper cross member (51) of the link mechanism (5) at an upper portion thereof and that turnably supports a middle portion of the lower cross member (52) at a lower portion thereof;
an upper longitudinal frame portion (215) that extends rearward in the front-and-rear direction of the body frame (21) from the lower portion of the link support portion (211);
a vertical frame portion (212) that extends downward in the up-and-down direction of the body frame (21) from a rear portion of the upper longitudinal frame portion (215); and
a lower longitudinal frame portion (214) that extends rearward from a lower portion of the vertical frame portion (212), and
a steering shaft (60) on which the handlebar (23) is provided at an upper portion thereof, that is turnably supported on the link support portion (211), and of which a lower portion lies further forwards in the front-and-rear direction of the body frame (21) than the upper portion,
wherein the link support portion (211) of the body frame (21) turnably supports the upper cross member (51) and the lower cross member (52) in such a way that an acute angle (θVC) that is formed by an imaginary plane (VPVC) that is perpendicular to turning axes (AUC, ALC) of the upper cross member (51) and the lower cross member (52) and the up-and-down direction of the body frame (21) is smaller than an acute angle (θSA) that is formed by a turning axis (SA) of the steering shaft (60) and the up-and-down direction of the body frame (21), and is **characterized in that** the vertical frame portion (212) of the body frame (21) is formed in such a way that:
an upper end (UEFE) of a front edge (FE) thereof is disposed further forwards than an imaginary plane (VPTT) that is parallel to the turning axis (SA) of the steering shaft (60) and that is brought into contact with rear portions of the right front wheel (31) and the left front wheel (32) with the vehicle (1) resting in the upright state,
a width in the left-and-right direction between the upper end (UEFE) and a lower end (LEFE) of the front edge (FE) is smaller than a distance between the right front wheel (31) and the left front wheel (32), and
an acute angle (θLFUL) that is formed by an imaginary line (VLFUL) that passes through the upper end (UEFE) and the lower end (LEFE) and the up-and-down direction of the body frame (21) is smaller than an acute angle (θSA) that is formed by the turning axis (SA) of the steering shaft (60) and the up-and-down direction of the body frame (21).

2. The vehicle (1) according to claim 1, wherein the vertical frame portion (212) of the body frame (21) is formed in such a way that an acute angle (θLFUL) that is formed by an imaginary line (VLFUL) that passes through the upper end (UEFE) and the lower end (LEFE) and the up-and-down direction of the body frame (21) is smaller than an acute angle (θVC) that is formed by an imaginary plane (VPVC) that is parallel to the turning axes (AUC, ALC) of the upper cross member (51) and the lower cross member (52) and the up-and-down direction of the body frame (21).

3. The vehicle (1) according to claim 1 or 2, wherein the vertical frame portion (212) of the body frame (21) is disposed in a position where the upper end (UEFE) lies nearer to the imaginary plane (VPTT) that is parallel to the turning axis (SA) of the steering shaft (60) and that is brought into contact with the rear portions of the right front wheel (31) and the left front wheel (32) with the vehicle (1) resting in the upright state than the turning axis (SA) of the steering shaft (60).

4. The vehicle (1) according to claim 1, 2 or 3, wherein the right front wheel (31) and the left front wheel (32) are supported so that upper ends thereof can move further upwards than the upper end (UEFE) of the vertical frame portion (212) of the body frame (21) in the up-and-down direction of the body frame (21).

5. The vehicle (1) according to claim 1, 2, 3 or 4, comprising:
a telescopic right shock absorber (33) that is provided between the right front wheel (31) and the right side member (53); and
a telescopic left shock absorber (35) that is provided between the left front wheel (32) and the left side member (54),
wherein the right shock absorber (33) and the left shock absorber (35) are provided in such a way that an acute angle (θTA) that is formed by a direction (TA) in which the right and left shock absorbers (33, 35) extend and contract and the up-and-down direction of the body frame (21) is the same as or smaller than an acute angle (θSA) that is formed by the turning axis (SA) of the steering shaft (60) and the up-and-down direction of the body frame (21).

6. The vehicle (1) according to claim 5, wherein the link mechanism (5) is provided in such a way that an acute angle (θVC) that is formed by an imaginary plane (VPVC) that is perpendicular to the turning axes (AUC, ALC) of the upper cross member (51) and the lower cross member (52) and the up-and-down direction of the body frame (21) is smaller than the acute angle (θTA) that is formed by the direction (TA) in which the right shock absorber (33) and the left shock absorber (35) extend or contract and the up-and-down direction of the body frame (21).

7. The vehicle (1) according to claim 1, 2, 3, 4 or 5 wherein the vertical frame portion (212) of the body frame (21) includes a single tubular member that makes up the front edge (FE) thereof and that is disposed at a center between the right front wheel (31) and the left front wheel (32) in the left-and-right direction of the body frame (21).

8. The vehicle (1) according to claim 7, wherein the body frame (21) is formed in such a way that an acute angle (θLFUR) that is formed by an imaginary line (VLFUR) that passes through the upper end (UEFE) and a rear end (REF) of a lower portion of the single tubular member that makes up the front edge (FE) of the vertical frame portion (212) and the up-and-down direction of the body frame (21) is smaller than an acute angle (θSA) that is formed by the turning axis (SA) of the steering shaft (60) and the up-and-down direction of the body frame (21).

## Patentansprüche

1. Ein Fahrzeug (1), das umfasst:
ein rechtes Vorderrad (31) und ein linkes Vorderrad (32), die in einer Links-und-Rechts-Richtung positioniert sind, gesehen von einem Fahrer, der das Fahrzeug fährt, und die durch Betätigung einer Längsstange (23) gelenkt werden können;
einen Gelenkmechanismus (5), der beinhaltet:
ein oberes Querelement (51), das oberhalb des rechten Vorderrads (31) und des linken Vorderrads (32) positioniert ist, mit dem Fahrzeug (1),ruhend in einem aufrechten Zustand;
ein unteres Querelement (52), das weiter unterhalb des oberen Querelements (51) in einer Oben-und-Unten-Richtung des Fahrzeugs (1) positioniert ist, und das oberhalb des rechten Vorderrads (31) und des linken Vorderrads (32) positioniert ist;
ein rechtes Seitenelement (53), das drehbar an einem rechten Abschnitt des oberen Querelements (51), an einem oberen Abschnitt desselben gelagert ist, das drehbar an einem rechten Abschnitt des unteren Querelements (52), an einem unteren Abschnitt desselben gelagert ist, das oberhalb des rechten Vorderrads (31) und des linken Vorderrads (32) positioniert ist, und welches das rechte Vorderrad (31) lagert; und
ein linkes Seitenelement (54), das drehbar an einem linken Abschnitt des oberen Querelements (51), an einem oberen Abschnitt desselben gelagert ist, das drehbar an einem linken Abschnitt des unteren Querelements (52), an einem unteren Abschnitt desselben gelagert ist, das oberhalb des rechten Vorderrads (31) und des linken Vorderrads (32) positioniert ist, und welches das linke Vorderrad (32) lagert; einen Körper-Rahmen (21), der sich in die Links-und-Rechts-Richtung des Fahrzeugs (1) neigen kann und beinhaltet:
einen Gelenk-Lagerabschnitt (211), der drehbar an einem Mittelabschnitt des oberen Querelements (51) des Gelenkmechanismus (5) an einem oberen Abschnitt desselben lagert, und der drehbar einen Mittelabschnitt des unteren Querelements (51) an einem unteren Abschnitt desselben lagert;
einen oberen Längs-Rahmenabschnitt (215), der sich nach hinten in der Vorder-und-Rück-Richtung des Körper-Rahmens (21) von dem unteren Abschnitt des Gelenk-Lagerabschnitts (211) erstreckt;
einen vertikalen Rahmenabschnitt (212), der sich nach unten in der Oben-und-Unten-Richtung des Körper-Rahmens (21) von einem hinteren Abschnitt des oberen Längs-Rahmenabschnitts (215) erstreckt; und
einen unteren Längs-Rahmenabschnitt (214), der sich nach hinten von einem unteren Abschnitt des vertikalen Rahmenabschnitts (212) erstreckt, und
einer Lenkwelle (60), an welcher die Lenkstange (23) an einem oberen Abschnitt derselben vorgesehen ist, die drehbar an dem Gelenk-Lagerabschnitt (211) gelagert ist, und von welcher ein unterer Abschnitt weiter vorne in der Vorder-und-RückRichtung des Körper-Rahmens (21) liegt, als der obere Abschnitt.
wobei der Gelenk-Lagerabschnitt (211) des Körper-Rahmens (21) drehbar das obere Querelement (51) und das untere Querelement (52) lagert, in so einer Weise das ein spitzer Winkel (θVC), der durch eine imaginäre Ebene (VPVC), die senkrecht zu Drehachsen (AUC, ALC) des oberen Querelements (51) und des unteren Querelements (52) sind, und der Oben-und-Unten-Richtung des Körper-Rahmens (21), gebildet ist, ist kleiner als ein spitzer Winkel (θSA), der durch eine Drehachse (SA) der Lenkwelle (60) und der Oben-und-Unten-Richtung des Körper-Rahmens (21) gebildet ist, und ist **dadurch gekennzeichnet, dass**
der vertikale Rahmenabschnitt (212) des Körper-Rahmens (21) ausgebildet ist in so einer Weise dass:
ein oberes Ende (UEFE) einer Vorderkante (FE) desselben weiter vorne positioniert ist als eine imaginäre Ebene (VPTT), die parallel zu der Drehachse (SA) der Lenkwelle (60) ist und die in Kontakt mit hinteren Abschnitten des rechten Vorderrads (31) und des linken Vorderrads (32) gebracht ist, mit dem Fahrzeug (1), ruhend in dem aufrechten Zustand,
eine Breite in der Links-und-Rechts-Richtung zwischen dem oberen Ende (UEFE) und einem unteren Ende (LEFE) der Vorderkante (FE) ist kleiner als ein Abstand zwischen dem rechten Vorderrad (31) und dem linken Vorderrad (32), und
ein spitzer Winkel (θLFUL), der durch eine imaginäre Linie (VLFUL), die sich durch das obere Ende (UEFE) und das untere Ende (LEFE) hindurchtritt, und die Oben-und-Unten-Richtung des Körper-Rahmens (21) ausgebildet ist, ist kleiner als ein spitzer Winkel (θSA), der durch die Drehachse (SA) der Lenkwelle (60) und der Oben-und-Unten-Richtung des Körper-Rahmens (21) ausgebildet ist.

2. Das Fahrzeug (1) gemäß Anspruch 1, wobei der vertikale Rahmenabschnitt (212) des Körper-Rahmens (21) ausgebildet ist in so einer Weise, dass ein spitzer Winkel (θFL), der durch eine imaginäre Linie (VLFUL), die durch das obere Ende (UEFE) und das untere Ende (LEFE) hindurchtritt, und die Oben- Untenrichtung des Körper-Rahmens (21), ausgebildet ist, kleiner ist als ein spitzer Winkel (θVC) der durch eine imaginäre Ebene (VPVC), die parallel zu den Drehachsen (AUC, ALC) des oberen Querelements (51) und des unteren Querelements (52) ist, und der Oben-und-Unten-Richtung des Körper-Rahmens (21), ausgebildet ist.

3. Das Fahrzeug (1) gemäß Anspruch 1 oder 2, wobei der vertikale Rahmenabschnitt (212) des Körper-Rahmens (21) in einer Position positioniert ist, in welcher das obere Ende (UEFE) näher zu der imaginären Ebene (VPTT) liegt, die parallel zu der Drehachse (SA) der Lenkwelle (60) ist, und die in Kontakt mit den hinteren Abschnitten des rechten Vorderrads (31) und des linken Vorderrads (32) gebracht ist, als die Drehachse (SA) der Lenkwelle (60), mit dem Fahrzeug (1), ruhend in dem aufrechten Zustand.

4. Das Fahrzeug (1) gemäß Anspruch 1, 2 oder 3, wobei das rechte Vorderrad (31) und das linke Vorderrad (32) gelagert sind, sodass obere Enden derselben sich weiter nach oben bewegen können als das obere Ende (UEFE) des vertikalen Rahmenabschnitts (212) des Körper-Rahmens (21) in der Oben-und-Unten-Richtung des Körper-Rahmens (21).

5. Das Fahrzeug (1) gemäß Anspruch 1, 2, 3 oder 4, das umfasst:
einen Teleskop-Rechten-Stoßdämpfer (33), der zwischen dem rechten Vorderrad (31) und dem linken Seitenelement (53) vorgesehen ist, und
einen Teleskop-Linken-Stoßdämpfer (35), der zwischen dem linken Vorderrad (32) und dem linken Seitenelement (54) vorgesehen ist,
wobei der rechte Stoßdämpfer (33) und der linke Stoßdämpfer (35) in so einer Weise vorgesehen sind, dass ein spitzer Winkel (θTA), der durch eine Richtung (TA), in welcher sich die rechten und linken Stoßdämpfer (33, 35) ausfahren und zusammenziehen und der Oben-und-Unten-Richtung des Körper-Rahmens (21) gebildet ist, ist der gleiche oder kleiner als ein spitzer Winkel (θSA), der durch die Drehachse (SA) der Lenkwelle (60) und der Oben-und-Unten-Richtung des Körper-Rahmens (21) ausgebildet ist.

6. Das Fahrzeug (1) gemäß Anspruch 5, wobei der Gelenkmechanismus (5) in so einer Weise vorgesehen ist, dass ein spitzer Winkel (θVC), der durch eine imaginäre Ebene (VPVC), die senkrecht zu den Drehachsen (AUC, ALC) des oberen Querelements (51) und des unteren Querelements (52) ist, und der Oben-und-Unten-Richtung des Körper-Rahmens (21) ausgebildet ist, kleiner ist als der spitze Winkel (θTA), der durch die Richtung (TA) in welcher sich der rechte Stoßdämpfer (33) und der linke Stoßdämpfer (35) ausfahren und zusammenziehen und der Oben-und-Unten-Richtung des Körper-Rahmens (21) ausgebildet ist.

7. Das Fahrzeug (1) gemäß Anspruch 1, 2, 3, 4 oder 5, wobei der vertikale Rahmenabschnitt (212) des Körper-Rahmens (21) ein einziges Rohrelement beinhaltet, dass die Vorderkante (FE) desselben bildet, und das in einer Mitte zwischen dem rechten Vorderrad (31) und dem linken Vorderrad (32) in der Links-und-Rechts-Richtung des Körper-Rahmens (21) positioniert ist.

8. Das Fahrzeug (1) gemäß Anspruch 7, wobei der Körper-Rahmen (21) in so einer Weise ausgebildet ist, dass ein spitzer Winkel (θLFUR), der durch eine imaginäre Line (VLFUR), die sich durch das obere Ende (UEFE) und ein hinteres Ende (REF) eines unteren Abschnitts des einzelnen Rohrelements, das die Vorderkante (FE) des vertikalen Rahmenabschnitts (212) bildet, und der Oben-und-Unten-Richtung des Körper-Rahmens (21) ausgebildet ist, kleiner ist als ein spitzer Winkel (θSA), der durch die Drehachse (SA) der Lenkwelle (60) und der Oben-und-Unten-Richtung des Körper-Rahmens (21) ausgebildet ist.

## Revendications

1. Un véhicule (1) comprenant :
une roue avant droite (31) et une roue avant gauche (32) disposées dans une direction gauche et droite vue d'un conducteur conduisant le véhicule (1), et pouvant être orientées en direction par l'action d'un guidon (23) ;
d'un mécanisme de liaison (5) incluant :
un élément de traverse supérieur (51) disposé au-dessus de la roue avant droite (31) et de la roue avant gauche (32) quand le véhicule (1) repose dans une position verticale ;
un élément de traverse inférieur (52) disposé sous l'élément de traverse supérieur (51) dans une direction haut et bas du véhicule (1) et disposé au-dessus de la roue avant droite (31) et de la roue avant gauche (32) ;
un élément de montant latéral droit (53) maintenu avec possibilité de rotation sur une partie droite de l'élément de traverse supérieur (51) au niveau d'une partie supérieure de celui-ci, maintenu avec possibilité de rotation sur une partie droite de l'élément de traverse inférieur (52) au niveau d'une partie inférieure de celui-ci, disposé au-dessus de la roue avant droite (31) et de la roue avant gauche (32) et soutenant la roue avant droite (31) ; et
un élément de montant latéral gauche (54) maintenu avec possibilité de rotation sur une partie gauche de l'élément de traverse supérieur (51) au niveau d'une partie supérieure de celui-ci, maintenu avec possibilité de rotation sur une partie gauche de l'élément de traverse inférieur (52) au niveau d'une partie inférieure de celui-ci, disposé au-dessus de la roue avant droite (31) et de la roue avant gauche (32) et soutenant la roue avant gauche (32),
un cadre de châssis (21) pouvant s'incliner dans la direction gauche et droite du véhicule (1) et incluant :
une partie support de liaison (211) qui soutient avec possibilité de rotation une partie médiane de l'élément de traverse supérieur (51) du mécanisme de liaison (5) au niveau d'une partie supérieure de celui-ci et qui soutient avec possibilité de rotation une partie médiane de l'élément de traverse inférieur (52) au niveau d'une partie inférieure de celui-ci ;
une partie de cadre longitudinale supérieure (215) s'étendant vers l'arrière dans la direction avant et arrière du cadre du châssis (21) à partir de la partie inférieure de la partie support de liaison (211) ;
une partie de cadre verticale (212) s'étendant vers le bas dans la direction haut et bas du cadre du châssis (21) à partir d'une partie arrière de la partie de cadre longitudinale supérieure (215) ; et
une partie de cadre longitudinale inférieure (214) s'étendant vers l'arrière depuis une partie inférieure de la partie de cadre verticale (212), et
une colonne de direction (60) sur laquelle est prévu le guidon (23) au niveau d'une partie supérieure de celle-ci, maintenue avec possibilité de rotation sur la partie support de liaison (211), et dont une partie inférieure s'avance plus vers l'avant dans la direction avant et arrière du cadre du châssis (21) que la partie supérieure,
dans lequel la partie support de liaison (211) du cadre du châssis (21) soutient avec possibilité rotation l'élément de traverse supérieur (51) et l'élément de traverse inférieur (52) de façon à ce qu'un angle aigu (θVC) formé par un plan imaginaire (VPVC) perpendiculaire à des axes de rotation (AUC, ALC) de l'élément de traverse supérieur (51) et l'élément de traverse inférieur (52) et la direction haut et bas du cadre du châssis (21) soit inférieur à un angle aigu (θSA) formé par un axe de rotation (SA) de la colonne de direction (60) et la direction haut et bas du cadre du châssis (21), et
est **caractérisé en ce que**
la partie verticale du cadre (212) du cadre du châssis (21) est mise en forme de façon que : une extrémité supérieure (UEFE) d'un bord avant (FE) de celui-ci est disposé plus vers l'avant qu'un plan imaginaire (VPTT) parallèle à l'axe de rotation (SA) de la colonne de direction (60) et qui est amené en contact avec des parties arrière de la roue avant droite (31) et de la roue avant gauche (32) quand le véhicule (1) repose en position verticale,
une largeur dans la direction gauche et droite entre l'extrémité supérieure (UEFE) et une extrémité inférieure (LEFE) du bord avant (FE) est inférieure à une distance entre la route avant droite (31) et la roue avant gauche (32), et
un angle aigu (θLFUL) formé par une ligne imaginaire (VLFUL) passant par l'extrémité supérieure (UEFE) et l'extrémité inférieure (LEFE) et la direction haut et bas du cadre du châssis (21) est inférieur à un angle aigu (θSA) formé par l'axe de rotation (SA) de la colonne de direction (60) et la direction haut et bas du cadre du châssis (21).

2. Le véhicule (1) selon la revendication 1, dans lequel la partie de cadre verticale (212) du cadre du châssis (21) est mise en forme de façon qu'un angle aigu (θLFUL) formé par une ligne imaginaire (VLFUL) passant par l'extrémité supérieure (UEFE) et l'extrémité inférieure (LEFE) et la direction haut et bas du cadre du châssis (21) soit inférieur à un angle aigu (θVC) formé par un plan imaginaire (VPVC) parallèle aux axes de rotation (AUC, ALC) de l'élément de traverse supérieur (51) et de l'élément de traverse inférieur (52) et la direction haut et bas du cadre du châssis (21).

3. Le véhicule (1) selon la revendication 1 ou 2, dans lequel la partie de cadre verticale (212) du cadre du châssis (21) est disposée dans une position où l'extrémité supérieure (UEFE) se trouve plus près du plan imaginaire (VPTT) parallèle à l'axe de rotation (SA) de la colonne de direction (60) et qui est amené en contact avec les parties arrière de la roue avant droite (31) et de la roue avant gauche (32) quand le véhicule (1) repose en position verticale, que de l'axe de rotation (SA) de la colonne de direction (60).

4. Le véhicule (1) selon la revendication 1, 2 ou 3, dans lequel la roue avant droite (31) et la roue avant gauche (32) sont soutenues de façon que des extrémités supérieures de celles-ci puissent se déplacer plus loin vers le haut que l'extrémité supérieure (UEFE) de la partie de cadre verticale (212) du cadre du châssis (21) dans la direction haut et bas du cadre du châssis (21).

5. Le véhicule (1) selon la revendication 1, 2, 3 ou 4, comprenant :
un amortisseur télescopique droit (33) prévu entre la roue avant droite (31) et l'élément de montant droit (53) ; et
un amortisseur télescopique gauche (35) prévu entre la roue avant gauche (32) et l'élément de montant gauche (54),
dans lequel l'amortisseur droit (33) et l'amortisseur gauche (35) sont prévus de façon qu'un angle aigu (θTA) formé par une direction (TA) dans laquelle les amortisseurs droit et gauche (33, 35) s'étendent et se contractent et la direction haut et bas du cadre du châssis (21) est égal ou inférieur à un angle aigu (θSA) formé par l'axe de rotation (SA) de la colonne de direction (60) et la direction haut et bas du cadre du châssis (21).

6. Le véhicule (1) selon la revendication 5, dans lequel le mécanisme de liaison (5) est prévu de façon qu'un angle aigu (θVC) formé par un plan imaginaire (VPVC) perpendiculaire aux axes de rotation (AUC, ALC) de l'élément de traverse supérieur (51) et de l'élément de traverse inférieur (52) et la direction haut et bas du cadre du châssis (21) soit inférieur à l'angle aigu (θTA) formé par la direction (TA) dans laquelle l'amortisseur droit (33) et l'amortisseur gauche (35) s'étendent ou se contractent et la direction haut et bas du cadre du châssis (21).

7. Le véhicule (1) selon la revendication 1, 2, 3, 4 ou 5, dans lequel la partie de cadre verticale (212) du cadre du châssis (21) inclut un élément tubulaire unique constituant son bord avant (FE) et disposé à un centre entre la roue avant droite (31) et la roue avant gauche (32) dans la direction gauche et droite du cadre du châssis (21).

8. Le véhicule (1) selon la revendication 7, dans lequel le cadre du châssis (21) est mis en forme de façon qu'un angle aigu (θLFUR) formé par une ligne imaginaire (VLFUR) passant par l'extrémité supérieure (UEFE) et une extrémité arrière (REF) d'une partie inférieure de l'élément tubulaire unique constituant le bord avant (FE) de la partie de cadre verticale (212) et la direction haut et bas du cadre du châssis (21) est inférieur à un angle aigu (θSA) formé par l'axe de rotation (SA) de la colonne de direction (60) et la direction haut et bas du cadre du châssis (21).
